# EUROPEAN PATENT SPECIFICATION

(11) **EP 3 035 677 B1**
(45) Date of publication and mention of the grant of the patent: **20.06.2018**
(21) Application number: 15199267.4
(22) Date of filing: 10.12.2015
(51) Int. Cl.: H04N 7/20, H04H 20/63, H04H 40/90, H04N 21/61

(54) **IMAGE PROCESSING APPARATUS AND CONTROL METHOD THEREOF**
BILDVERARBEITUNGSVORRICHTUNG UND ZUGEHÖRIGES STEUERUNGSVERFAHREN
APPAREIL DE TRAITEMENT D'IMAGES ET SON PROCÉDÉ DE COMMANDE

(30) Priority: 15.12.2014 KR 20140180231
(43) Date of publication of application: 22.06.2016
(73) Proprietor: Samsung Electronics Co., Ltd., Gyeonggi-do 16677 (KR)
(72) Inventor: PARK, Ji-yeon, Seoul (KR); KIM, Du-ri, Seoul (KR)
(74) Representative: Appleyard Lees IP LLP

(56) References cited:
- US-A1- 2012 264 365
- "New tuning format "JESS" (JULTEC Enhanced Stacking System) for CSS systems", , 26 May 2013 (2013-05-26), pages 1/8-8/8, XP055265897, Retrieved from the Internet: URL:http://jultec.de/JESS.pdf [retrieved on 2016-04-15]

## Description

### BACKGROUND

### Field

Apparatuses and methods consistent with the exemplary embodiments relate to an image processing apparatus, such as a TV or a set-top box, that displays an image based on image data on its own display screen or outputs image data processed in accordance with an image processing process to an external apparatus with a display screen or projection means for displaying an image based on the image data, and a method of controlling the same, and more particularly to an image processing apparatus and a control method thereof, in which a plurality of image processing apparatuses can communicate with a satellite antenna signal relay according to communication-format specifications supportable by the satellite antenna signal relay while respectively receiving image signals from the satellite antenna signal relay installed at the outside, for instance on the outside of a building or structure.

### Description of the Related Art

An image processing apparatus processes an image signal/video data received from the exterior in accordance with various video processing processes. The image processing apparatus may display an image based on the processed video data on its own display panel, or output the processed image signal to another display apparatus provided with a panel so that on the corresponding display apparatus can display an image based on the processed image signal. That is, the image processing apparatus may include the panel capable of displaying an image or include no panel as long as it can process the video data. For example, the former may include a television (TV), and the latter may include a set-top box.

The image processing apparatus may use various methods to receive an image signal. For example, the image processing apparatus may receive an image signal through a cable directly connected to broadcasting equipment of a broadcasting station, the image processing apparatus wirelessly may receive an image signal in the form of a radio frequency (RF) signal through an RF antenna connected by a wire, or the image processing apparatus may receive an image signal through a satellite antenna signal relay by a wire and wirelessly. Among these methods, the method of using the satellite antenna signal relay is as follows. The satellite antenna signal relay wirelessly receives an image signal from a communication satellite located on a geostationary orbit of the earth, and transmits the image signal to the image processing apparatus through a wire. The image processing apparatus processes the image signal, received from the satellite antenna signal relay, to be displayed as an image.

One satellite antenna signal relay may be capable of transmitting the image signal to the plurality of image processing apparatuses, and communication formats previously regulated to distinguish image data tuned according to the respective image processing apparatuses may be designated in accordance with specific regional locations or technical developments. However, even though the satellite antenna signal relay and the image processing apparatus may support the same nominal communication formats, their supported formats may be different in version from each other. In such cases, the image signal tuned to the image processing apparatus may be not be successfully transmitted from the satellite antenna signal relay, and therefore it is desirable to solve such problems for system including the satellite antenna signal relay and a plurality of connected image processing apparatuses.

### SUMMARY

According to the present invention there is provided an apparatus and method as set forth in the appended claims. Other features of the invention will be apparent from the dependent claims, and the description which follows.

According to an aspect of an exemplary embodiment, an image processing apparatus is provided including: a communicator configured to connect with one of a plurality of ports of a cable connected to a signal relay for being tuned to a broadcast signal, and communicate with the signal relay through one of a first communication protocol supporting a first number of ports among the plurality of ports and a second communication protocol supporting a second number greater than the first number; and at least one processor configured to transmit a tuning command for being tuned to the broadcast signal to the signal relay, configured to receive the broadcast signal tuned in response to the tuning command from the signal relay, and configured to process the received broadcast signal to be displayed as an image, the at least one processor transmitting the tuning command based on the first communication protocol to the signal relay if it is determined that a port number of the port connected to the communicator is within a first number range that is supported by the first communication protocol based on identification information of the port. The at least one processor may transmit the tuning command based on the second communication protocol to the signal relay when it is determined that a port number of the connected port is beyond (i.e. greater than) the first number range supported by the first communication protocol. Thus, the image processing apparatus can receive the tuned broadcast signal from the signal relay in accordance with a supported protocols of the signal relay even though a user cannot check whether or not the signal relay supports or is compatible with the first communication protocol.

The identification information of the port may include an identification number corresponding to a port number of the connected port, and the at least one processor may determine that the port number of the connected port is within the first number range supported by the first communication protocol if the identification (port) number does not exceed a maximum port number supported by the first communication protocol, but will determine that a port number of the connected port is beyond the first number range supported by the first communication protocol if the identification (port) number exceeds the maximum port number. The maximum port number supported by the second communication protocol may be greater than the maximum port number supported by the first communication protocol. Thus, it can be determined, from the identification information of the port, which communication protocol the connected port corresponds to, based on the identification information of the connected port.

Each identification (port) number of the plurality of ports and the maximum port number supported by the first communication protocol may be integers equal to or higher than 0. Thus, it is possible to identify the port based on digital bits.

The first communication protocol may include, be according to, or support, EN50494, and the second communication protocol may include, be according to, or support EN50607.

The at least one processor may be configured to transmit a command set to the signal relay which command set causes the signal relay to send a reply, for instance to send a reply within a preset time period, when it is determined, for example by the signal relay, that the port number of the connected port is beyond i.e. greater than) the first number range supported by the first communication protocol, and the at least one processor may transmit the tuning command based on the second communication protocol, to the signal relay, upon receiving the reply to the command set, from the signal relay, within a preset period of time. The at least one processor may display a warning message that the tuned broadcast signal is not receivable from the signal relay no reply to the command set is received at the at least one processor, from the signal relay, within the preset period of time. Thus, the image processing apparatus can determine the communication protocols supported by the signal relay even though a user may not be aware of the communication protocol the signal relay can support, and indeed the invention eliminates the need for the user to be aware of this and allows for configuration of communication protocols without need for technical input, such as protocol identification to be used, from the user.

The image processing apparatus may further include a user input configured to allow a user to input the identification information (i.e. simple information such as port number) for the ports. Thus, the image processing apparatus can easily acquire the identification information of the connected port.

The image processing apparatus may be a television (TV) or the like display apparatus, but not limited thereto. For instance, the image processing apparatus may be a set-top box or the like.

According to an aspect of an exemplary embodiment, a method of controlling an image processing apparatus is provided including: by the image processing apparatus, connecting with one of a plurality of ports of a cable connected to a signal relay for being tuned to a broadcast signal; by the image processing apparatus, transmitting a tuning command for being tuned to the broadcast signal to the signal relay by one of a first communication protocol supporting or compatible with a first number of ports among the plurality of ports and a second communication protocol supporting or compatible with a second number of ports greater than the first number; and by the image processing apparatus, receiving the broadcast signal tuned in response to the tuning command from the signal relay and processing the received broadcast signal to be displayed as an image, wherein the transmitting of the tuning command includes: acquiring identification information about a port to which the image processing apparatus is connected; and transmitting the tuning command based on the first communication protocol to the signal relay if it is determined that a port number of the connected port is within a first number range supported by, or compatible with, the first communication protocol based on the acquired identification information. The transmitting the tuning command may include transmitting the tuning command based on the second communication protocol to the signal relay if it is determined that a port number of the connected port is beyond (i.e. greater than) the first number range supported by, or compatible with, the first communication protocol. Thus, the image processing apparatus can receive the tuned broadcast signal from the signal relay in accordance with the supported protocols that are compatible with the signal relay even though a user may not need to, or be able to check whether or not the signal relay supports the first communication protocol or some other protocol.

The identification information of the port may include an identification number (i.e. the port number) of the connected port, and the at least one processor may determine that the port number of the connected port is within the first number range supported by the first communication protocol if the identification (port) number does not exceed a maximum port number supported by the first communication protocol, but may determine that a port number of the connected port is beyond the first number range supported by the first communication protocol if the identification (port) number exceeds the maximum port number. Thus, it can be determined what communication protocol the connected port corresponds to, based on the identification information of the connected port.

The first communication protocol may include, be according to, or support EN50494, and the second communication protocol may include, be according to, or support EN50607.

The transmitting the tuning command may include: transmitting a command set to cause the signal relay to send a reply, for instance to send a reply within a preset time period, when it is determined, for instance determined by the signal relay, that the port number of the connected port is beyond (i.e. greater than) the first number range supported by the first communication protocol; and transmitting the tuning command based on the second communication protocol to the signal relay when the reply to the command set is received, at the one or more processor, from the signal relay, within a preset period of time. The method may include: displaying a warning message that the tuned broadcast signal is not receivable from the signal relay when no reply to the command from the signal relay is received within the preset period of time. Thus, the image processing apparatus can determine the communication protocols supported by the signal relay even though a user may not need know or be aware of the communication protocol or protocols that the signal relay can support.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a view of illustrating a system according to a first exemplary embodiment;
FIG. 2 is a view of illustrating installation of a system according to a second exemplary embodiment;
FIG. 3 is a block diagram of a signal relay in the system of FIG. 2;
FIG. 4 is a block diagram of an image processing apparatus in the system of FIG. 2;
FIG. 5 is a view of illustrating that an image processing apparatus supporting EN50494 is upgraded to support EN50607 in the system of FIG. 2;
FIG. 6 and FIG. 7 are views of illustrating user interfaces (Uls) displayed when an initial setting service for the image processing apparatus is executed in the system of FIG. 2;
FIG. 8 is a view of illustrating a structure of a tuning command in basic EN50494;
FIG. 9 is a view of illustrating a structure of a tuning command about channel change in EN50494;
FIG. 10 is a view of illustrating a structure of a tuning command about channel change in EN50607;
FIG. 11 to FIG. 14 are views of illustrating communication and operability between apparatuses according to support communication protocols in the system of FIG. 2;
FIG. 15 is a flowchart showing a control method of an image processing apparatus according to a third exemplary embodiment;
FIG. 16 is a view of illustrating communication and operability between apparatuses according to support communication protocols in the system based on the control method of FIG. 15;
FIG. 17 is a view of illustrating operations between a signal relay and an image processing apparatus in a system according to a fourth exemplary embodiment;
FIG. 18 is a view of illustrating a warning message displayed in the image processing apparatus at operation S290 of FIG. 17;
FIG. 19 is a block diagram of an image processing apparatus according to a fifth exemplary embodiment;
FIG. 20 is a flowchart showing a control method of the image processing apparatus of FIG. 19;
FIG. 21 is a block diagram of a signal relay according to a sixth exemplary embodiment;
FIG. 22 is a flowchart showing a control method of an image processing apparatus according to the sixth exemplary embodiment; and
FIG. 23 is a flowchart showing a control method of an image processing apparatus according to a seventh exemplary embodiment.

### DETAILED DESCRIPTION OF EXEMPLARY EMBODIMENTS

Below, exemplary embodiments will be described in detail with reference to accompanying drawings. The following descriptions of the exemplary embodiments are made by referring to elements shown in the accompanying drawings, in which like numerals refer to like elements having substantively the same functions.

In the description of the exemplary embodiments, an ordinal number used in terms such as a first element, a second element, etc. is employed for describing variety of elements, and the terms are used for distinguishing between one element and another element. Therefore, the meanings of the elements are not limited by the terms, and the terms are also used just for explaining the corresponding embodiment without limiting the idea of the invention.

Further, the exemplary embodiments will describe only elements directly related to the idea of the invention, and description of the other elements will be omitted. However, it will be appreciated that the elements, the descriptions of which are omitted, are not unnecessary to realize the apparatus or system according to the exemplary embodiments. In the following descriptions, terms such as "include" or "have" refer to presence of features, numbers, steps, operations, elements or combination thereof, and do not exclude presence or addition of one or more other features, numbers, steps, operations, elements or combination thereof.

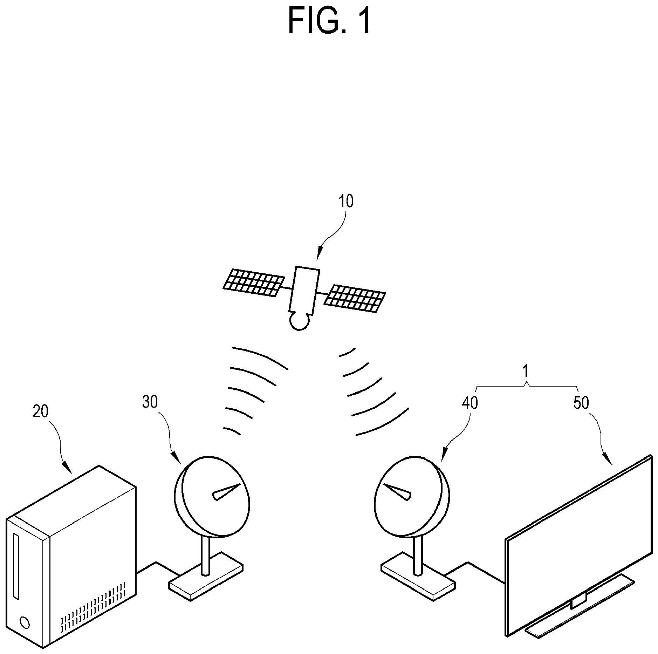

FIG. 1 is a view of illustrating a system 1 according to a first exemplary embodiment.

As shown in FIG. 1, the system 1 according to this embodiment has a signal transmission structure based on a satellite relay, and includes a signal relay 40 which wirelessly receives an image signal from a communication satellite 10, and an image processing apparatus 50 which displays an image based on an image signal received from the signal relay 40. In this exemplary embodiment, the image processing apparatus 50 is represented as a television (TV) or the like display apparatus, but not limited thereto. Alternatively, the image processing apparatus may be achieved by a set-top box or various other apparatuses.

The signal relay 40 receives a satellite signal received from a communication satellite 10 located on a geostationary orbit of the earth. For example, a broadcast signal output from broadcasting equipment 20 of a broadcasting station is converted into an uplink signal by the signal relay 30, and the uplink signal is transmitted to a communication satellite 10 by the signal relay 30. The communication satellite 10 transmits a downlink signal corresponding to the uplink signal to the signal relay 40 on the side of the image processing apparatus 50 if receiving the uplink signal from the signal relay 30 on the side of the broadcasting equipment 20.

The signal relay 40 uses one or more satellite dishes to receive the downlink signal from the communication satellite 10, and sends the image processing apparatus 50 a tuned signal obtained by tuning the downlink signal in response to a request from the image processing apparatus 50. The transmission of the data/signal between the signal relay 40 and the image processing apparatus 50 is achieved through a cable. The signal relay 40 with one satellite dish (not shown) may receive the downlink signal from only one communication satellite 10, and the signal relay 40 with two satellite dishes may respectively receive the downlink signals from two different communication satellites 10. That is, the number of communication satellites 10 from which the downlink signals are simultaneously received in the signal relay 40 is equal to the number of satellite dishes. The image processing apparatus 50 processes the tuned signal received from the signal relay 40 to be displayed as an image. If the image processing apparatus 50 is the TV, it displays a broadcast image by itself. If the image processing apparatus 50 is the set-top box, the processed image signal is output to and displayed on the display apparatus.

The image processing apparatus 50 communicates with the signal relay 40 based on a preset communication protocol. For example, if a channel change event is generated by a user, the image processing apparatus 50 transmits a command corresponding to this event to the signal relay 40, and receives and processes a tuned signal tuned by the corresponding command from the signal relay 40. The communication protocol or the communication formats for the communication between the image processing apparatus 50 and the signal relay 40 may be based on various protocols. The communication between the image processing apparatus 50 and the signal relay 40 is enabled at least when they both support the corresponding protocols. The communication formats will be described later.

In the system 1 of FIG. 1, one image processing apparatus 50 is connected to one signal relay 40. However, the system 1 may include one signal relay 40 and a plurality of image processing apparatuses 50, and this case will be described below.

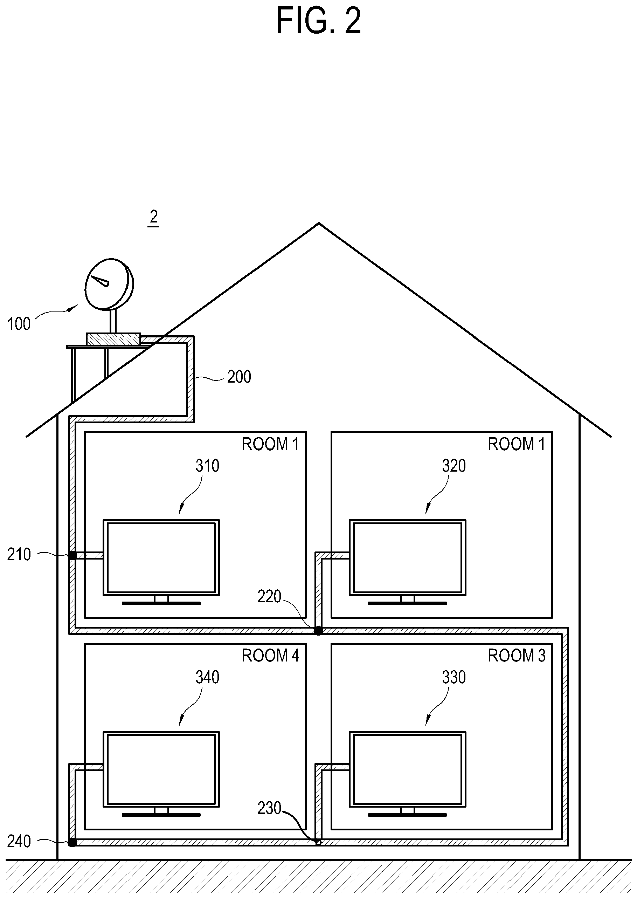

FIG. 2 is a view of illustrating installation of a system, referred to for conciseness as "system 2" herein according to a second exemplary embodiment;
As shown in FIG. 2, the system 2 may be installed in a house or mansion including a plurality of rooms ROOM1, ROOM2, ROOM3, ROOM4, in which the system 2 includes one signal relay 100, a cable 200 connected to the signal relay 100, and a plurality of image processing apparatuses 310, 320, 330, 340 respectively connected to nodes 210, 220, 230, 240 of the cable 200.

The satellite signal received from the communication satellite by the signal relay 100 is generally interfered with a building structure, and therefore the signal relay 100 may be installed at a place such as a high place outside the mansion, for example, the roof of the mansion or the like, which is generally difficult for a user to approach and has minimum interference with a signal.

The rooms ROOM1, ROOM2, ROOM3, ROOM4 in the mansion are respectively provided with the image processing apparatuses 310, 320, 330, 340, and all the image processing apparatuses 310, 320, 330, 340 receives and processes a tuned signal from the signal relay 100. The signal is transmitted and received between the signal relay 100 and the plurality of image processing apparatuses 310, 320, 330, 340 through the cable 200.

Of course, the system 2 may be achieved in such a manner that individual cables are connected from the signal relay 100 to the respective image processing apparatuses 310, 320, 330, 340. However, this manner increases the number of cables and thus installation and maintenance are difficult. Further, a problem arises in that the signal relay 100 needs input/output terminals to which many cables are connected.

Accordingly, the system 2 according to this exemplary embodiment is achieved in such a manner that one single or coaxial cable 200 is connected to the signal relay 100, and the image processing apparatuses 310, 320, 330, 340 are respectively connected to the nodes 210, 220, 230, 240 of the cable 200. Each node 210, 220, 230, 240 of the cable 200 is provided with a physical socket, slot or port to which the image processing apparatus 310, 320, 330, 340 can be connected.

Here, the plurality of ports 210, 220, 230, 240 provided in the cable 200 are distinguishable from one another. For example if there are four ports 210, 220, 230, 240 in total, the ports 210, 220, 230, 240 may be respectively numbered from 1 to 4, for example, a port No. 1 210, a port No. 2 220, a port No. 3 230 and a port No. 4 240. Alternatively, the ports 210, 220, 230, 240 may be respectively numbered from 0 to 3, for example, a port No. 0 210, a port No. 1 220, a port No. 2 230 and a port No. 3 240. For instance, if the image processing apparatus 310 is connected to the port No. 0 210, the image processing apparatus 340 is connected to the port No. 3 240. In addition, the ports 210, 220, 230, 240 may be numbered as follows: the first port 210, the second port 220, the third port 230, and the fourth port 240. Further, the ports 210, 220, 230, 240 are numbered in order of the ports 210, 220, 230, 240.

Under the system 2, the tuned signals individually tuned with regard to the respective image processing apparatuses 310, 320, 330, 340 have to be transmitted from the signal relay 100 to the respective image processing apparatuses 310, 320, 330, 340, and therefore the cable 200 has to distinguish and transfer the tuned signal different according to the respective image processing apparatuses 310, 320, 330, 340. This technique is called a single cable distribution method. By the single cable distribution method, the signal relay 100 can provide independent tuning throughout the whole satellite receiving range for the plurality of image processing apparatuses 310, 320, 330, 340 through the single cable 200.

As European industrial protocols for the single cable distribution method, there are EN50494 regulated in 2007 by committee European de normalisation electrotechnique (CENELEC), and EN50607 developed from EN50494 and regulated in 2013, of which detailed descriptions will be made later.

To operate using the single cable distribution method, the communication between the signal relay 100 and the image processing apparatus 310, 320, 330, 340 is based on a certain communication bus protocol. As an example of such a communication bus protocol used in Europe, there is a digital satellite equipment control (DiSEqC) bus. Fundamentally, DiSEqC has a structure of a single/multi slave system corresponding to a single master. For communication based on a DiSEqC protocol, both the signal relay 100 and the image processing apparatus 310, 320, 330, 340 have to support the DiSEqC protocol. EN50494 and EN50607 are based on the DiSEqC protocol.

The DiSEqC protocol is varied in function depending on its versions. An outline of the DiSEqC protocol versions is given as follows. DiSEqC 1.0 allows switching between satellite sources up to four satellite sources. DiSEqC 1.1 allows switching between satellite sources up to sixteen satellite sources. DiSEqC 1.2 allows switching between satellite sources up to sixteen satellite sources, and allows control of a single shaft of a satellite motor (not shown). The satellite motor (not shown) is provided in the signal relay 100 so as to control orientation of the satellite dish (not shown) of the signal relay 100, and DiSEqC 1.2 allows the image processing apparatus 310, 320, 330, 340 to control the orientation of the satellite dish (not shown) of the signal relay 100.

DiSEqC 2.0 is based on DiSEqC 1.0 and allows interactive communication between the signal relay 100 and the image processing apparatus 310, 320, 330, 340. DiSEqC 2.1 is based on DiSEqC 1.1 and allows interactive communication between the signal relay 100 and the image processing apparatus 310, 320, 330, 340. DiSEqC 2.2 is based on DiSEqC 1.2 and allows interactive communication between the signal relay 100 and the image processing apparatus 310, 320, 330, 340.

DiSEqC of a later version is compatible with that of a previous version, but DiSEqC of a previous version is not compatible with that of the later version.

Under DiSEqC 1.x, the image processing apparatus 310, 320, 330, 340 can transmit a command to the signal relay 100, but the signal relay 100 can transmit only the tuned signal corresponding to the command of the image processing apparatus 310, 320, 330, 340 to the image processing apparatus 310, 320, 330, 340 and cannot transmit a command to the image processing apparatus 310, 320, 330, 340. However, under DiSEqC 2.x, the image processing apparatus 310, 320, 330, 340 and the signal relay 100 can exchange a command with each other.

The fundamental principle of the single cable distribution method is as follows. The image processing apparatus 310, 320, 330, 340 has substantially the same dedicated user band as a frequency band offered by the signal relay 100. The image processing apparatus 310, 320, 330, 340 makes a request for a certain transponder frequency through a DiSEqC-based command. The signal relay 100 converts a signal received from the communication satellite into a user band IF (intermediate frequency) center frequency according to the respective image processing apparatuses 310, 320, 330, 340. The signal relay 100 combines the converted transponders of the respective image processing apparatuses 310, 320, 330, 340, and transmits them to the respective image processing apparatuses 310, 320, 330, 340 through the cable 200. The combination signal transmitted through the cable 200 is distributed to the respective image processing apparatuses 310, 320, 330, 340.

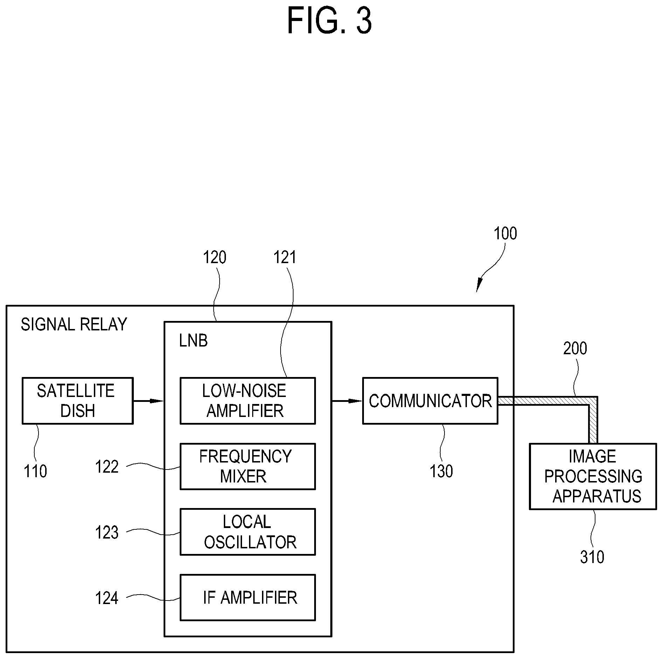

Below, elements of the signal relay 100 will be described with reference to FIG. 3.

FIG. 3 is a block diagram of the signal relay 100 in the system of FIG. 2.

As shown in FIG. 3, the signal relay 100 includes a satellite dish 110 for receiving a satellite signal from the communication satellite, a low-noise block downconverter (LNB) 120 for converting the satellite signal received from the satellite dish 110 into the tuned signal corresponding to the image processing apparatus 310, and a communicator 130 for outputting the tuned signal processed by the LNB 120 to the cable 200.

The satellite dish 110 is installed outside the signal relay 100 and receives a satellite signal relayed from the communication satellite. The satellite dish 110 is generally a parabola antenna shaped like a disc concaved at the center thereof, and its orientation may be changed by driving a separate motor (not shown). The satellite dish 110 receives a satellite signal from one among a plurality of communication satellites in accordance with its orientation. Basically, one satellite dish 110 receives a satellite signal from one communication satellite.

One or more satellite dishes 110 may be installed in the signal relay 100. The number of satellite dishes 110 that can be installed in one signal relay 100 is varied depending on communication protocols supportable by the signal relay 100. If the signal relay 100 supports EN50494, the signal relay 100 can have up to two satellite dishes 110. On the other hand, if the signal relay 100 supports EN50607, the signal relay 100 can have three or more satellite dishes 110.

The equipment for supporting EN50494 and the equipment for supporting EN50607 are different in hardware from each other. Therefore, the signal relay 100 designed to support EN50494 needs to replace or upgrade its hardware in order to support EN50607, and only software upgrading is not enough. That is, it is proper to replace the signal relay 100 in order to newly support EN50607 in an environment where the signal relay 100 designed to support EN50494 is installed.

The LNB 120 is also called a low-noise converter (LNC) or a low-noise downconverter (LND). The LNB 120 includes a low-noise amplifier 121, a frequency mixer 122, a local oscillator 123 and an IF amplifier 124. The LNB 120 amplifies a satellite signal collected by the satellite dish 110, and down-converts frequency blocks of the amplified signal into blocks lower than intermediate frequencies. Such down-converting or down-conversion makes it possible to use a more inexpensive coaxial cable 200 in transmitting a signal to the image processing apparatus 310. If an original radio frequency signal is directly transmitted to the image processing apparatus 310 without down-converting, a more expensive and unpractical cable is needed.

Power for driving the signal relay 100 such as the LNB 120 is received from the image processing apparatus 310 through the cable 200, and thus there is no need of a separate battery or connection with an exterior power source.

A satellite signal received in the LNB 120 through the satellite dish 110 is very weak and thus has to be amplified before the down-conversion. The low-noise amplifier 121 amplifies such a weak signal.

The communication satellite uses a very high frequency in transmitting a satellite signal. The satellite signal having such a high frequency cannot pass through a building structure such as a wall, a roof, a glass window, etc., and therefore the signal relay 100, in particularly, the satellite dish 110 has to be installed outdoors. Based on the superheterodyne principle, the LNB 120 converts a block or band of a satellite signal having a relatively high frequency into a similar signal that can be transmitted in a lower frequency (for example, an intermediate frequency). The relatively low frequency decreases attenuation of the signal transmitted through the cable, and it is therefore possible to reduce information loss of the signal transmitted to the image processing apparatus 310 via the cable 200. This makes the system 2 have a structure more inexpensive and simpler than that of transmitting a high frequency signal.

The frequency conversion is typically performed by mixing a fixed frequency generated by the local oscillator 123 with an incoming signal input to the LNB 120 in the frequency mixer 122. Thus, a frequency sum signal and a frequency difference signal are generated. The frequency sum signal is filtered, and the frequency difference signal is amplified by the IF amplifier 124 and then transmitted to the communicator 130 and transmitted to the image processing apparatus 310 through the cable 200.

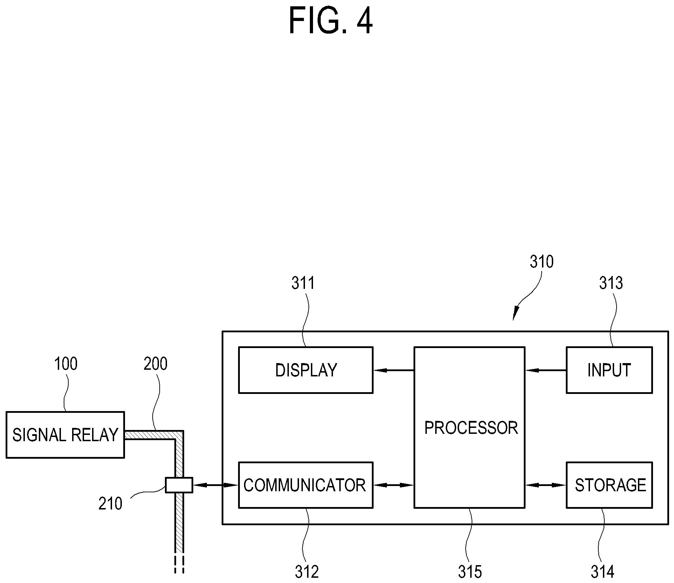

Below, the image processing apparatus 310 will be described with reference to FIG. 4. The following descriptions are also applicable to the other image processing apparatuses 320, 330, 340 shown in FIG. 2, and thus repetitive descriptions will be avoided.

FIG. 4 is a block diagram of the image processing apparatus 310 in the system of FIG. 2.

As shown in FIG. 4, the image processing apparatus 310 includes a display 311 for displaying an image, a communicator 312 connecting with the cable 200 to transmit and receive signal/data to and from the signal relay 100, an input 313 for receiving a user's input, a storage 314 for storing data, and a processor 315 for controlling general operations of the image processing apparatus 310 and processes the signal/data in accordance with various processing processes. In this exemplary embodiment, the image processing apparatus 310 includes the display 311, but may not include the display 311 as necessary. Further, the communicator 312, the storage 314 and the processor 315 may be mounted on to a printed circuit board and constitute an image processing board (not shown).

The display 311 displays an image based on an image signal processed by the processor 315. The display 311 may be achieved by various display types such as liquid crystal, plasma, a light-emitting diode, an organic light-emitting diode, a surface-conduction electron emitter, a carbon nano-tube, nano-crystal, etc.

The display 311 may include additional elements in accordance with its types. For example, if the display 311 is achieved by the liquid crystal, the display 130 includes a liquid crystal display (LCD) panel (not shown), a backlight unit (not shown) for supplying light to the LCD panel, and a panel driving substrate (not shown) for driving the LCD panel (not shown).

The communicator 312 electrically connects with the cable 200 and receives a tuned signal from the signal relay 100. The communicator 312 is connected one of the ports 210 of the coaxial cable 200. Further, the communicator 312 can transmit various commands to the signal relay 100 through the cable 200, and receives the tuned signal from the signal relay 100 in accordance with the commands. The communicator 312 collectively refers to an element provided in the image processing apparatus 310 and communicating with various external electronic apparatuses. Therefore, the communicator 312 not only connect with the signal relay 100 through the cable 200, but also may further include various wireless communication modules (not shown) and wired ports (not shown).

The communicator 312 includes a tuner, and monitors a frequency band assigned to the corresponding image processing apparatus 310 among the tuned signal received from the signal relay 100. This assigned frequency band is a user band of the corresponding image processing apparatus 310, and the communicator 312 acquires and is turned to image data corresponding to its own user band from the tuned signal. That is, the communicator 312 acquires only the image data of the user band assigned to the corresponding image processing apparatus 310 from the tuned signal, and does not acquire the image data of the other user bands.

The user band involves the number of the port 210. That is, if a number of the port 210 recorded in the user band in the tuned signal is equal to a number of the port 210 to which the communicator 312 is connected, the image data corresponding to the user band is related to the image processing apparatus 310. On the other hand, if a number of the port 210 recorded in the user band in the tuned signal is different from the number of the port 210 to which the communicator 312 is connected, the image data corresponding to the user band is unrelated to the image processing apparatus 310.

The input 313 sends the processor 315 a variety of preset control commands or information in response to a user's operation or inputs. The input 313 sends the processor 315 various information in relation to events generated by a user's control corresponding to a user's intention and transmits the information as data to the processor 315. The input 313 may be achieved in various forms for generating input information from a user. For example, the input 313 may include a key/a button installed outside the image processing apparatus 310, a remote controller provided remotely and separately from a main body of the image processing apparatus 310 and communicating with the communicator 312, or a touch screen integrated with the display 311.

The storage 314 stores a variety of data under control of the processor 315. The storage 314 is achieved by a flash-memory, a hard-disc drive or the like nonvolatile memory to preserve data regardless of supply of system power. The storage 314 is accessed by the processor 315 and performs reading, writing, editing, deleting, updating or the like with regard to data.

Further, the storage 314 may be achieved by a read only memory (ROM). The recording in the ROM is not freer than those of the flash-memory or hard-disc drive, but performed when the image processing apparatus 310 is in a certain operation mode or performed under a limited environment such as an external certain recording device.

The processor 315 performs various processes with regard to a signal/data received in the communicator 312. If receiving an image signal from the communicator 312, the processor 315 applies the image processing process to the image signal and outputs the processed image signal to the display 311 so that the display 311 can display an image. Further, the processor 315 generates a command corresponding to an event generated by the input 313 or the like, and transmits the generated command to the signal relay 100 through the communicator 312 or implements operation or calculation corresponding to the generated command. To this end, the processor 315 may be achieved by a group of a central processing unit (CPU, not shown), various chipsets (not shown) and a random access memory (RAM, not shown), or may be achieved by a system-on-chip (SOC).

There is no limit to the kind of image processing process performed by the processor 315, and the video processing process may for example include demultiplexing for separating an input signal into sub-signals such as video, audio and additional data, decoding corresponding to image formats of image signal, de-interlacing for converting image data from an interlaced type into a progressive type, scaling for adjusting the image signal to have a preset resolution, noise reduction for improving image quality, detail enhancement, frame refresh rate conversion, etc.

The processor 315 transmits a tuning command based on EN50494 or EN50607 to the signal relay 100 in order to make a request for a tuned signal corresponding to the image processing apparatus 310 to the signal relay 100. Data about an EN50494-based tuning command or an EN50607-based tuning command is stored in the storage 314. Since EN50607 is extended from EN50494, EN50607 can support the EN50494-based tuning command on the principle of the backward compatibility.

The processor 315, that is, the image processing apparatus 310 is also provided to support EN50494 or EN50607 like the signal relay 100. However, on the contrary to the signal relay 100 that needs hardware replacement, the image processing apparatus 310 provided to support EN50494 can support EN50607 through software upgrading as long as it is allowed in a system resource.

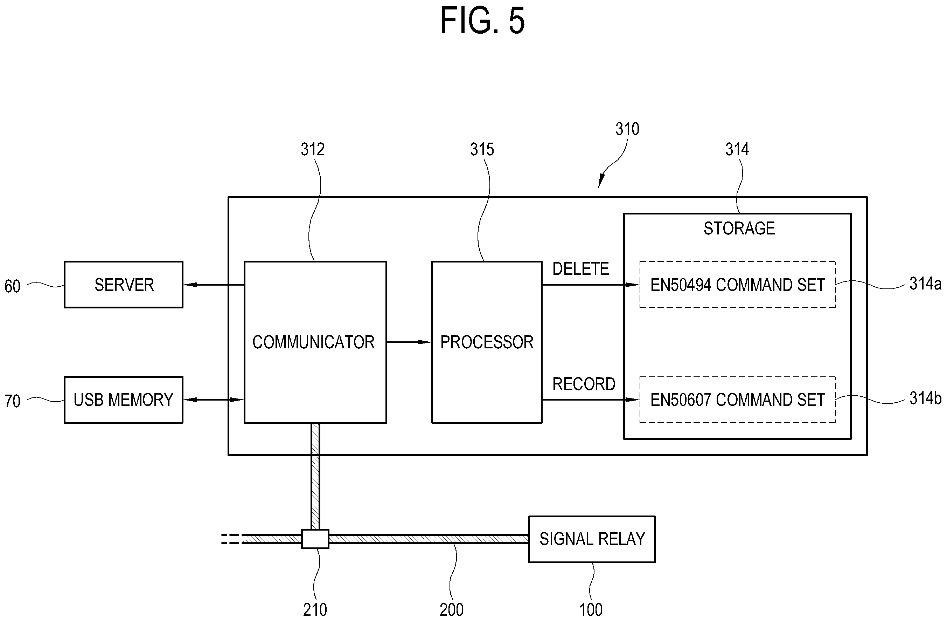

FIG. 5 is a view of illustrating that an image processing apparatus 310 supporting EN50494 is upgraded to support EN50607.

As shown in FIG. 5, if the image processing apparatus 310 is initially provided to support EN50494, the storage 314 stores an EN50494-based command set 314a. To transmit a tuning command for receiving a tuned signal to the signal relay 100, the processor 315 calls the EN50494-based command set 314a stored in the storage 314.

If there is an event about upgrading to EN50607, the processor 315 determines whether the communicator 312 connects with an external apparatus 60, 70 where an EN50607-based command set 314b is stored. The external apparatus 60, 70 may be a server 60 connecting with the communicator 312 through a network or a universal serial bus (USB) memory 70 locally connecting with the communicator 312. If it is determined that the EN50607-based command set 314b is stored in the external apparatus 60, 70 connected to the communicator 312, the processor 315 receives the EN50607-based command set 314b from the external apparatus 60, 70.

Further, the external apparatus 60, 70 may have an execution code for automatically transmitting the EN50607-based command set 314b to the processor 315 when the external apparatus 60, 70 is connected to the communicator 312. In this case, the external apparatus 60, 70 transmits the EN50607-based command set 314b to the communicator 312 in accordance with the previously stored execution code if detecting the connection with the communicator 312.

The processor 315 deletes the EN50494-based command set 314a previously stored in the storage 314 if receiving the EN50607-based command set 314b, and newly records the EN50607-based command set 314b. The processor 315 calls and uses the EN50607-based command set 314b stored in the storage 314 when transmitting the tuning command to the signal relay 100.

While transmitting the tuning command to the signal relay 100, the processor 315 has to specify the port 210 of the cable 200 to which the image processing apparatus 310 is connected, and inform the signal relay 100 of the number of the port 210. In order to tune the image data corresponding to the tuning command of the image processing apparatus 310 in accordance with the dedicated user band of the tuned signal, the signal relay 100 has to have information about the number of the port 210 to which the image processing apparatus 310 is connected. The processor 315 acquires the number of the port 210, to which the image processing apparatus 310 is connected, which is recorded in the storage 314 or a separate register (not shown).

The number of the port 210 is previously recorded in the image processing apparatus 310, and this record is performed by a user.

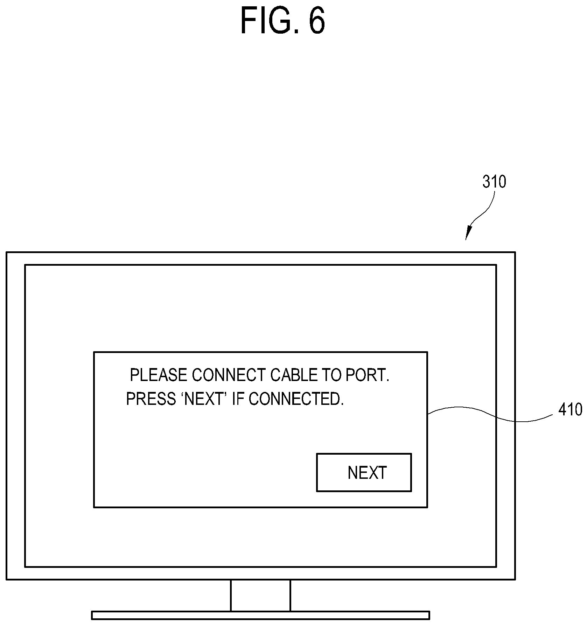

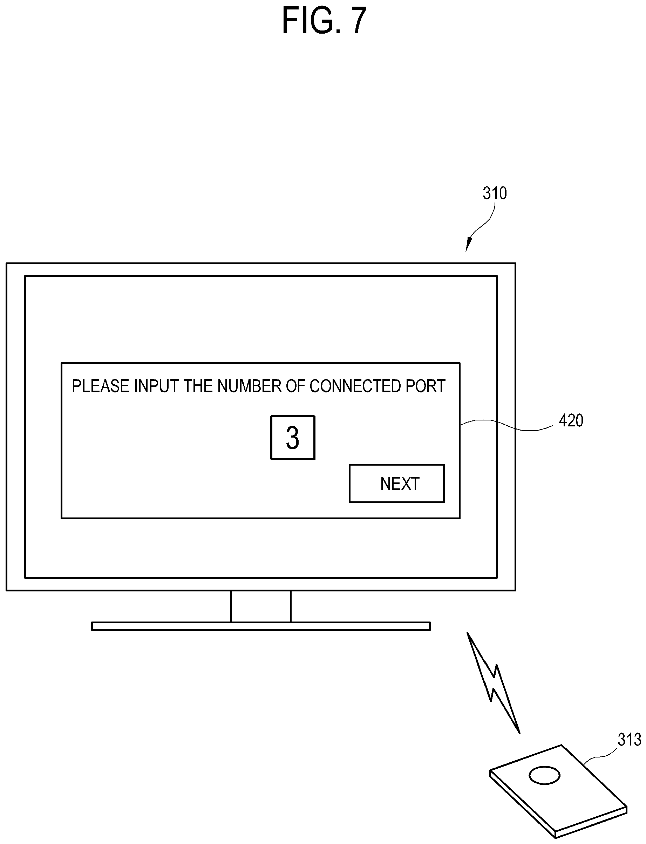

FIG. 6 and FIG. 7 are views of illustrating user interfaces (Uls) displayed when an initial setting service for the image processing apparatus 310 is executed.

As shown in FIG. 6, the image processing apparatus 310 displays a UI image 410 when the initial setting service of the image processing apparatus 310, i.e., a basic environment setting service of the image processing apparatus 310 is executed when a user first turns on the system after buying and installing the image processing apparatus 310. The display of the UI image 410 may be variously fulfilled by the initial setting service, a user's designation or the like.

The UI image 410 includes a message making a request for connecting the cable of the image processing apparatus 310 to the port 210 (see FIG. 5) to a user. The UI image 410 moves to the next step if a user connects the image processing apparatus 310 with the port 210 and then selects "Next". Alternatively, the image processing apparatus 310 may automatically move to the next step if it is detected that the image processing apparatus 310 is connected to the port 210 while the UI image 410 is displayed.

As shown in FIG. 7, the image processing apparatus 310 displays a new UI image 420 in the next step. The UI image 420 is provided to guide a user to input the number of the port 210 (see FIG. 5) to which the image processing apparatus 310 is connected. Thus, a user inputs the number of the port 210 through the input 313 and moves to the next step.

The image processing apparatus 310 records the number input through the UI image 420 as the number of the port 210 in the storage 314 (see FIG. 4). Thereafter, the stored number of the port 210 may be called while the tuning command is generated.

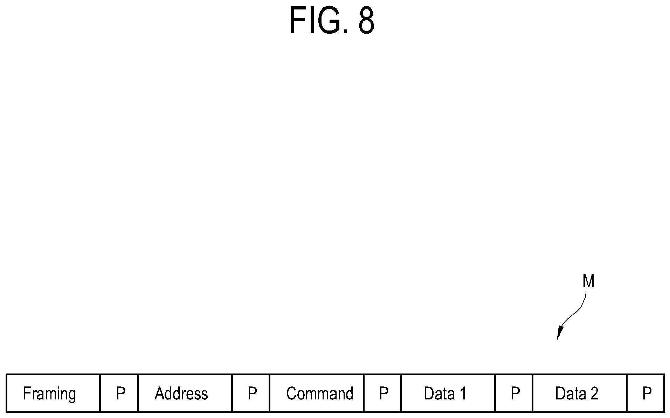

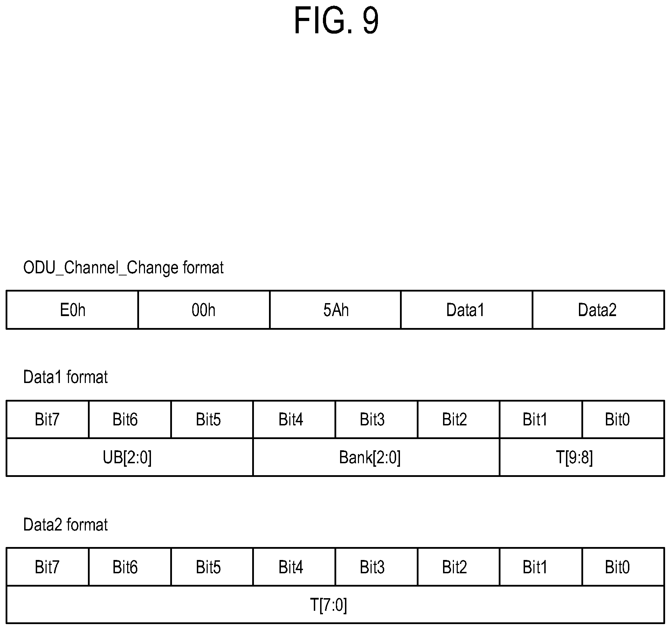

Below, the structure of the tuning command in EN50494 will be described with reference to FIG. 8 and FIG. 9.

FIG. 8 is a view of illustrating a structure of a tuning command in basic EN50494,

As shown in FIG. 8, the EN50494-based tuning command has a message structure M including 5 bytes each having 8 data bits, and an odd parity bit added to each byte. In general, duration of 1 byte is 13.5ms, and therefore the message M has duration of 67.5ms. The message M is limited to 5 bytes in order to minimize traffic and avoid data loss.

The first section of the message M is called framing, and a command based on the single cable distribution method uses only a framing word of EOh to minimize the traffic of the whole DiSEqC signal. According to the protocols, EOh has contents of command from master, no reply required, and first transmission.

The second section is called address, and designates what slave apparatus is related to the corresponding message M.

The third section is called a command, and specifies an operation to be performed by the slave apparatus designated in the address section. In the address and command sections, words based on a preset protocol, for example, 00h, 10h, 11h, 5Ah, 5Bh and like words are used. Since contents about the respective words are regulated in EN50494, detailed descriptions thereof will be avoided.

The fourth and fifth sections are called data, and this will be described later.

FIG. 9 is a view of illustrating a structure of a tuning command about channel change in EN50494.

As shown in FIG. 9, a command of ODU_Channel_change is a tuning command to be transmitted when a slave apparatus, i.e. the image processing apparatus 310 (see FIG. 5) makes a request for tuning a new channel to a master apparatus, i.e. the signal relay 100 (see FIG. 5).

Referring to FIG. 9, the command of ODU_Channel_change applies words of EOh in the framing section, 00h in the address section, and 5Ah in the command section.

In the Data 1 format, UB is a section for indicating the port expected to have a requested signal, i.e. the user band. [2:0] refers to from the zeroth bit to the second bit. Bank indicates a signal bank for conveying to a requested channel. In the Data 1 format and Data 2 format, T refers to a decimal number of the tuning word.

Here, a bit number of user band (UB) is important. In the EN50494-based tuning command, a total number of cases distinguishable in the UB is 8 since the user band is 3 bits. This refers to that the total number of slave apparatuses distinguishable by the master apparatus supporting EN50494 is 8, and it is impossible to distinguish the corresponding slave apparatuses if nine or more slave apparatuses are connected. In other words, when the master apparatus supporting EN50494 offers the tuned signal to the slave apparatuses through the plurality of coaxial cable ports, the number of slave apparatuses or ports to which the tuned signal is offered is limited by up to 8.

To solve this problem, EN50607 has been developed and extended from the old protocols of EN50494. Like that of EN50494, Data formats of EN50607 are based on 22kHz PWK modulation having one parity bit per byte as used in DiSEqC. However, on the contrary to that of EN50494, the data format of EN50607 does not have the structure of the framing, address and command sections. Instead, the EN50607-based tuning command always starts with a framing word of 7Xh.

For example, several framing words of 7Xh are as follows.
70h: (from the slave apparatuses) tuning
71h: (from the slave apparatuses) tuning (PIN protected)
74h: (from the master apparatus) replied with "OK", data attachable
7Ah: (from the slave apparatuses) enquiry about the user band (UB) valid for the master apparatus
7Bh: (from the slave apparatuses) enquiry about the UB in which PIN is actually protected
7Ch: (from the slave apparatuses) enquiry about the UB being in use
7Dh: (from the slave apparatuses) enquiry about the UB center frequency of the requested UB.

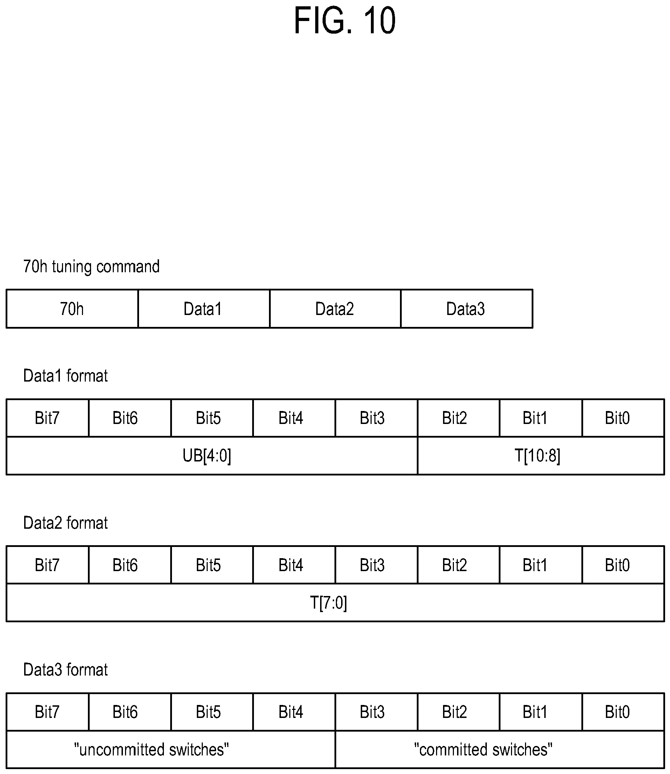

Below, a structure of a tuning command in EN50607 will be described with reference to FIG. 10.

FIG. 10 is a view of illustrating a structure of a tuning command about channel change in EN50607.

As shown in FIG. 10, a 70h tuning command of EN50607 has a structure where data sections follows a framing word of 70h. In Data format, the meanings of UB and T are the same as those in EN50494, and "uncommitted/committed switches" are bits regulated in DiSEqC specifications, for example, as if Bit. 0 indicates "band" and Bit. 1 indicates "polarity".

Here, the user band (UB) is important. In EN50607, the user band has 5 bits, and thus the number of cases distinguishable in the user band is 32 in total. This refers to that the total number of slave apparatuses distinguishable by the master apparatus supporting EN50607 is 32, or when the master apparatus supporting EN50607 offers the tuned signal to the slave apparatuses through the plurality of coaxial cable ports, the number of slave apparatuses or ports to which the tuned signal is offered is limited by up to 32.

In brief, the master apparatus supporting EN50494 can distinguish a total of eight slave apparatuses from the number 0 to the number 7, whereas the master apparatus supporting EN50607 can distinguish a total of thirty two slave apparatuses from the number 0 to the number 31.

Like the master apparatus provided to support one of EN50494 and EN50607, the slave apparatuses are also provided to support one of EN50494 and EN50607. In the system including one master apparatus and a plurality of slave apparatuses, the apparatuses supporting EN50494 and the apparatuses supporting EN50607 may be used together. In this case, communication may be disabled due to the difference in support protocols among the apparatuses. Such a case will be described below.

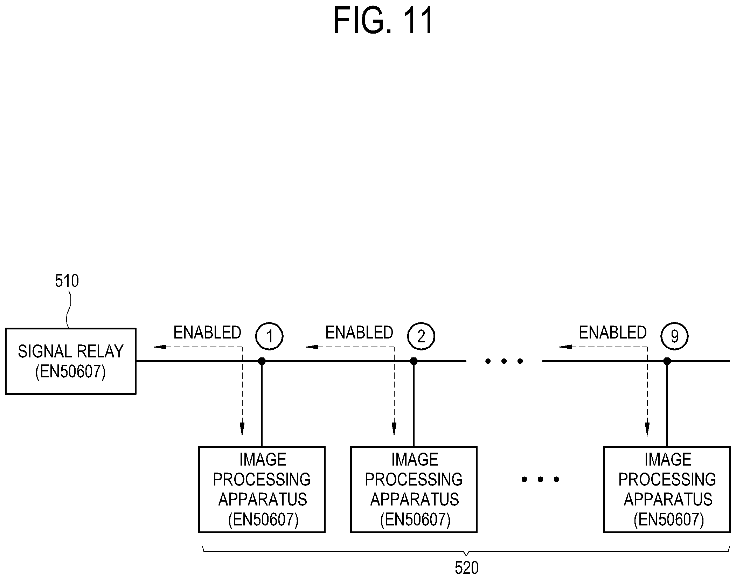

FIG. 11 to FIG. 14 are views of illustrating communication and operability between apparatuses according to support communication protocols in the system of FIG. 2;

Referring to FIG. 11, a signal relay 510 supporting EN50607 is electrically connected to image processing apparatuses 520 through the coaxial cable.

In the following exemplary embodiments, EN50607 will be called a new protocol, and EN50494 will be called an old protocol. Further, the cable has thirty two or less ports, and the image processing apparatuses 520 are connected to nine or more ports among the ports.

If the image processing apparatus 520 supports the new protocol, the image processing apparatus 520 can communicate with the signal relay 510 and normally operate even through it is connected to any port among the ports of the cable. In this case, the signal relay 510 can interpret the tuning command from the image processing apparatus 520 since both the signal relay 510 and the image processing apparatus 520 support the same new protocol.

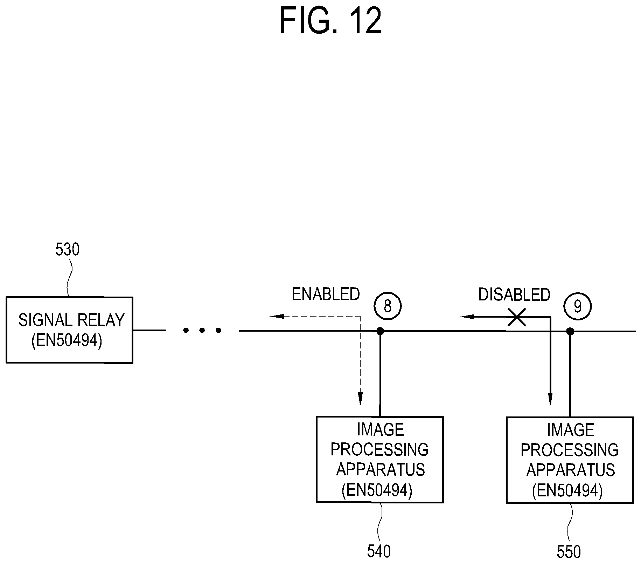

Referring to FIG. 12, a signal relay 530 supports the old protocol, and image processing apparatuses 540, 550 also support the old protocol.

If the image processing apparatus 540 is connected to one of the first to eighth ports of the cable, the image processing apparatus 540 can communicate with the signal relay 530 and normally operate. However, if the image processing apparatus 550 is connected to the ninth or higher-ordered port, the image processing apparatus 550 cannot communicate with the signal relay 530 and normally operate.

In this case, the signal relay 530 supporting the old protocol can distinguish up to only eight ports since the command based on the old protocol has a user band of 3 bits. The corresponding signal relay 530 cannot distinguish the ninth or higher-ordered port, and therefore the communication with the image processing apparatus 550 and the supply of the tuned signal to the image processing apparatus 550 are disabled.

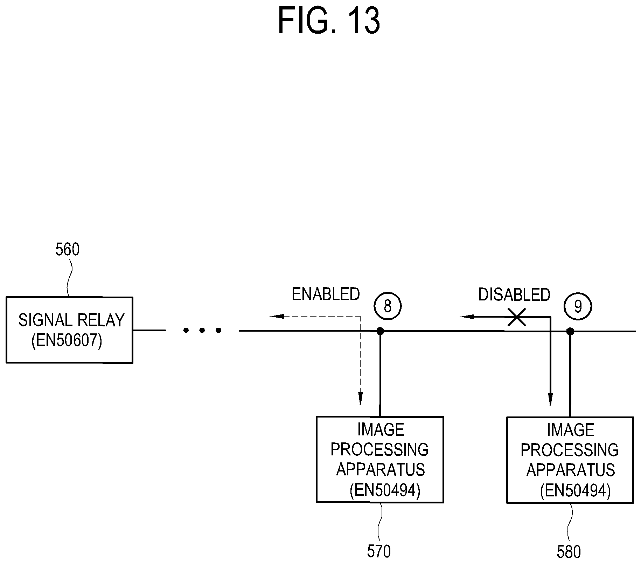

Referring to FIG. 13, a signal relay 560 supports the new protocol, and the image processing apparatuses 570, 580 support the old protocol.

Since the new protocol has the backward compatibility to the old protocol, this case is similar to the foregoing case shown in FIG. 12. That is, if the image processing apparatus 570 is connected to one of the first to eighth ports of the cable, the image processing apparatus 570 can communicate with the signal relay 560 and normally operate. However, if the image processing apparatus 580 is connected to the ninth or higher-ordered port, the image processing apparatus 580 cannot communicate with the signal relay 560 and normally operate. In this case, the image processing apparatus 580 cannot transmit the new protocol-based tuning command to the signal relay 560 corresponding to the ninth or higher-ordered port since the image processing apparatus 580 itself cannot support the new protocol even though the signal relay 560 supports the new protocol.

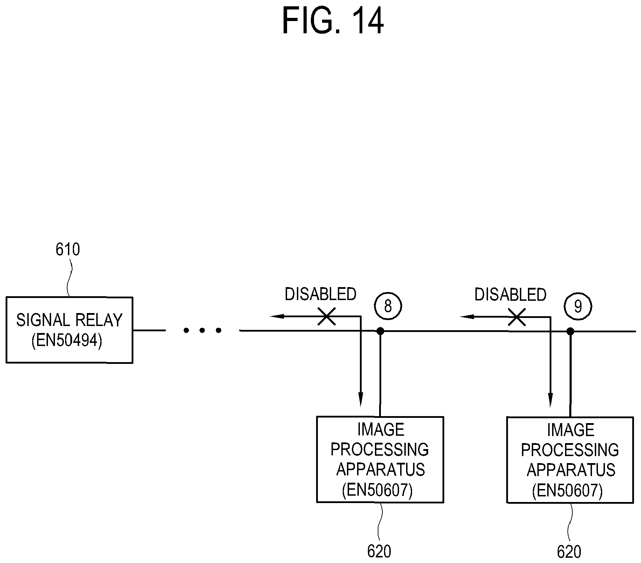

Referring to FIG. 14, the signal relay 610 supports the old protocol, and the image processing apparatuses 620 support the new protocol.

The image processing apparatus 620 cannot communicate with the signal relay 610 and normally operate even through it is connected to any port among the ports of the cable. In this case, the signal relay 610 cannot interpret the tuning command when the image processing apparatus 620 transmits the new protocol-based tuning command to the signal relay 610.

Like this, if the apparatuses supporting the old protocol and the apparatuses supporting the new protocol are mixed in the system, the system may abnormally operate due to difference in protocols. Here, it is easy for a user to approach the image processing apparatuses, i.e. the slave apparatuses, and therefore upgrading from the old protocol to the new protocol may be achieved by simply updating software in the image processing apparatus.

On the other hand, the signal relay, i.e. the master apparatus is basically installed at the exterior, such as a roof, a high wall or the like place, which is difficult for a user to approach, in order to facilitate reception of the satellite signal. Accordingly, it is not easy for a user to check whether the signal relay supports the old protocol or the new protocol. In addition, the signal relay is hard to upgrade from the old protocol to the new protocol on the contrary to the image processing apparatus, and needs the replacement of hardware or the replacement of the whole apparatus in order to support the new protocol.

Accordingly, in the system where one signal relay transmits a signal to the plurality of image processing apparatuses in accordance with the single cable distribution method, there is a need of making the image processing apparatus normally receive and process the tuned signal from the signal relay in accordance with the supported or compatible protocols of the signal relay without the need for a user to direct check the technical details of whether the signal relay supports the old protocol or the new protocol. This allows for suitable protocol selection without need for technical knowledge or input from the user.

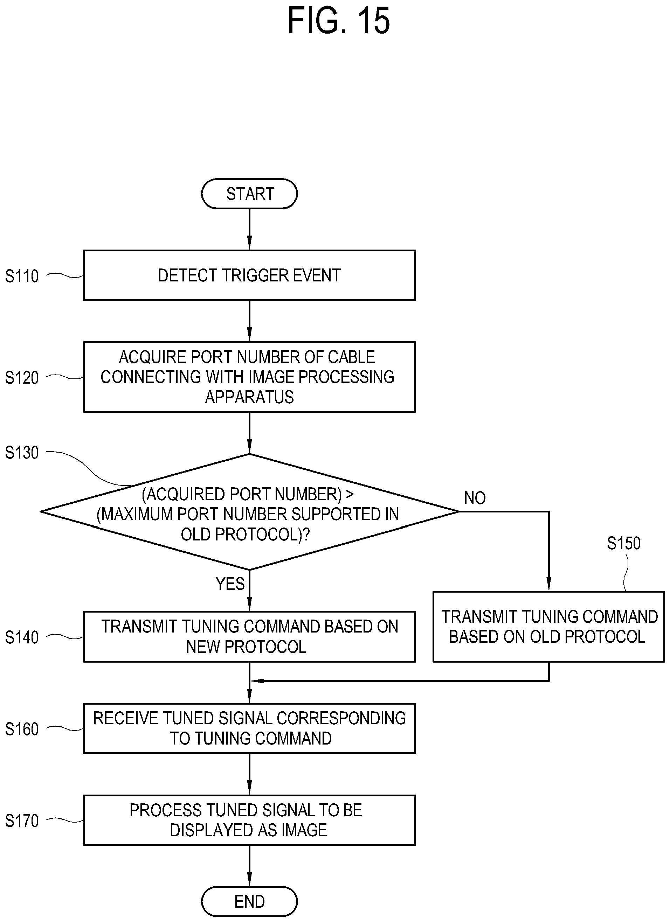

FIG. 15 is a flowchart showing a control method of an image processing apparatus according to a third exemplary embodiment. In this exemplary embodiment, the image processing apparatus is one among the plurality of image processing apparatuses which receive the tuned signal from one signal relay through the cable, and the following descriptions are also applicable to the other image processing apparatuses.

Further, this exemplary embodiment is related to the image processing apparatus supporting the new protocol between the old protocol and the new protocol. In particular, this exemplary embodiment is to operate the image processing apparatus as normally as possible under the conditions of FIG. 14.

As shown in FIG. 15, at operation S110 the image processing apparatus detects generation of a trigger event. The trigger event collectively refers to an event where the image processing apparatus issues a preset tuning command to the signal relay. The trigger event is not limited to one kind of content, and may for example include that a user issues a command to change a broadcast image into that of a certain channel.

At operation S120 the image processing apparatus acquires a port number of a cable to which the image processing apparatus is connected. Here, the port number of the cable is a positive integer equal to or higher than 0, and is previously stored in the image processing apparatus in accordance with a user's previous input.

At operation S130 the image processing apparatus determines whether or not the acquired port number exceeds the maximum port number supported in the old protocol. Here, the number of ports supported in the old protocol is smaller than that in the new protocol. For example, EN50494 and EN50607 are as follows: the maximum number of ports in EN50494 is 8 since EN50494 can support total eight ports from 0 to 7, and the maximum number of ports in EN50607 is 32 since EN50607 can support total thirty two ports from 0 to 31.

Of course, if the maximum number of ports exceeds 32, it is also not supported in EN50607. However, this exemplary embodiment is related to the system including both the apparatuses supporting EN50494 and the apparatuses supporting EN50607, and therefore it will be taken into account that the maximum number of ports of the cable does not exceed 32. However, if this exemplary embodiment is applied to protocols other than EN50494 and EN50607, the old protocol and the new protocol may respectively correspond to a predetermined first protocol and a predetermined second protocol, and the number of ports supportable by the old protocol may be also different from that of this exemplary embodiment. That is, the present inventive concept is not limited to EN50494 and EN50607, but may be achieved by those skilled in the art through a variety of workshop modification.

If it is determined that the acquired port number exceeds the maximum number of ports supportable in the old protocol, at operation S140 the image processing apparatus transmits a new protocol-based tuning command to the signal relay. For example, it will be taken into account that the acquired port number is 8. In this case, the image processing apparatus is beyond a recognizable range of the signal relay supporting EN50494, and thus the image processing apparatus first transmits an EN50607-based command to the signal relay.

If the signal relay supports EN50607, the image processing apparatus normally communicate with the signal relay and transmits the EN50607-based command to the signal relay, thereby receiving the tuned signal corresponding to the command. However, the image processing apparatus is not informed what protocol the current signal relay supports. Thus, the image processing apparatus performs separate processes which will be described later.

On the other hand, if it is determined that the acquired port number does not exceed the maximum number of ports supportable in the old protocol, at operation S150 the image processing apparatus transmits an old protocol-based tuning command to the signal relay. For example, if the acquired port number is 5, it is equal to or smaller than the maximum number of ports supportable in EN50494. In this case, the image processing apparatus transmits an EN50494-based tuning command to the signal relay even though the image processing apparatus supports EN50607. In this case, the signal relay can normally interpret the command from the image processing apparatus regardless of whether the signal relay supports or is compatible with EN50494 or EN50607.

At operation S160, the image processing apparatus receives the tuned signal from the signal relay in accordance with the previously transmitted tuning command. At operation S170, the image processing apparatus processes the received tuned signal to be displayed as an image.

With the foregoing operations, the image processing apparatus can normally communicate with the signal relay in accordance with the communication protocols supported in the signal relay. Further, it is possible to guarantee the normal operations of the system in which the signal relay offers the tuned signals to the plurality of image processing apparatuses by the single cable distribution method.

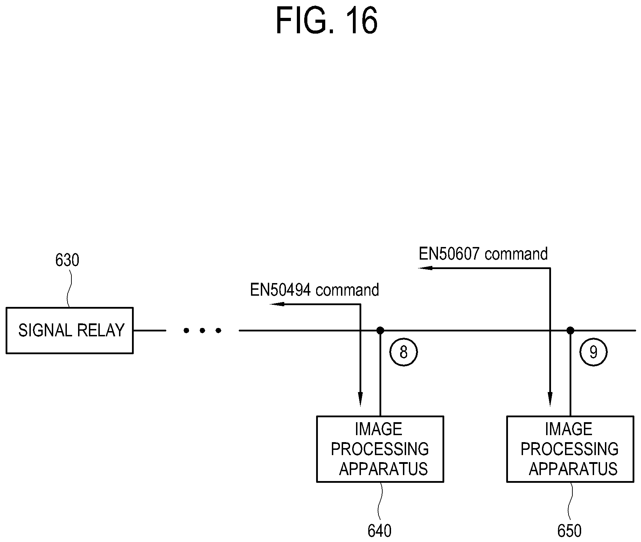

FIG. 16 is a view of illustrating communication and operability between apparatuses according to support communication protocols in the system based on the control method of FIG. 15.

As shown in FIG. 16, the present inventive concept is applied in the state that a user of the image processing apparatus 640, 650 does not know which one of the old protocol and the new protocol the signal relay 630 supports. In this exemplary embodiment, the image processing apparatus 640, 650 is provided to support the new protocol.

If the image processing apparatus 640 is connected to one port among the first to eighth ports supportable in the old protocol, the image processing apparatus 640 transmits the old protocol-based tuning command to the signal relay 630 even though it supports the new protocol. Since the image processing apparatus 640 transmits the old protocol-based tuning command and the image processing apparatus 640 is connected to the port within the recognizable range of the old protocol even though the signal relay 630 supports the old protocol, the signal relay 630 can normally interpret the tuning command.

If the image processing apparatus 650 is connected to the ninth or higher-ordered ports not supported by the old protocol, the image processing apparatus 650 transmits the new protocol-based tuning command to the signal relay 630. In this case, the signal relay 630 normally interpret the tuning command if it supports the new protocol.

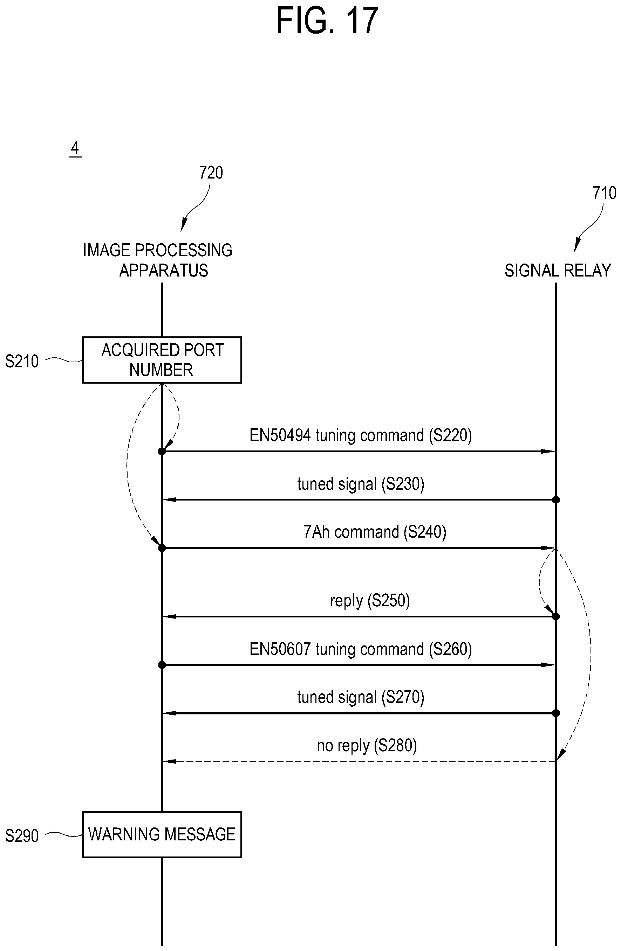

On the other hand, the signal relay 630 cannot interpret the new protocol-based tuning command if it supports the old protocol, and thus the system does not normally operate. Accordingly, the image processing apparatus 650 may first determine what protocol the signal relay 630 supports, before transmitting the tuning command at a point of time when the port number is acquired. Below, such an exemplary embodiment will be described with reference to FIG. 17.

FIG. 17 is a view of illustrating operations between a signal relay 710 and an image processing apparatus 720 in a system 4 according to a fourth exemplary embodiment.

As shown in FIG. 17, at operation S210 the image processing apparatus 720 acquires the port number of the cable to which the image processing apparatus 720 is connected.

If the acquired port number is within a range supportable in the old protocol, at operation S220 the image processing apparatus 720 transmits the old protocol-based tuning command to the signal relay 710. Further, at operation S230 the image processing apparatus 720 receives the tuned signal from the signal relay 710.

On the other hand, if the acquired port number is beyond the range supportable in the old protocol, at operation S240 the image processing apparatus 720 transmits a preset command to the signal relay 710 for receiving a reply from the signal relay 710. To this end, the image processing apparatus 720 has to support DiSEqC 2.0 or higher version in order to receive the reply after transmitting such a command.

Here, the preset command may be variously designated as long as it is regulated to make the signal relay 710 reply. For example, there is a command of "7Ah". 7Ah is a command issued by the slave apparatuses to enquire the valid user band of the master apparatus so that the master apparatus can reply to the enquiry of the slave apparatuses.

If there is a reply from the signal relay 710 at operation S250, this means that the signal relay 710 supports the new protocol. Thus, at operation S260 the image processing apparatus 720 transmits the new protocol-based tuning command to the signal relay 710. Further, at operation S270 the image processing apparatus 720 receives the tuned signal from the signal relay 710.

On the other hand, if there is no reply from the signal relay 710 for a preset period of time at operation S280, it means that the signal relay 710 cannot recognize the command of 7Ah, i.e. supports the old protocol. Thus, at operation S290 the image processing apparatus 720 displays a warning message so as to inform a user that the image processing apparatus 720 cannot normally receive the tuned signal from the signal relay 710. However, the image processing apparatus 720 has to support a version higher than DiSEqC 2.x in order to receive a response from the signal relay 710. If the image processing apparatus 720 supports a version of DiSEqC 1.x, it may be difficult to receive the response. Therefore, the foregoing operation may be selectively applied in accordance with specifications of the image processing apparatus 720.

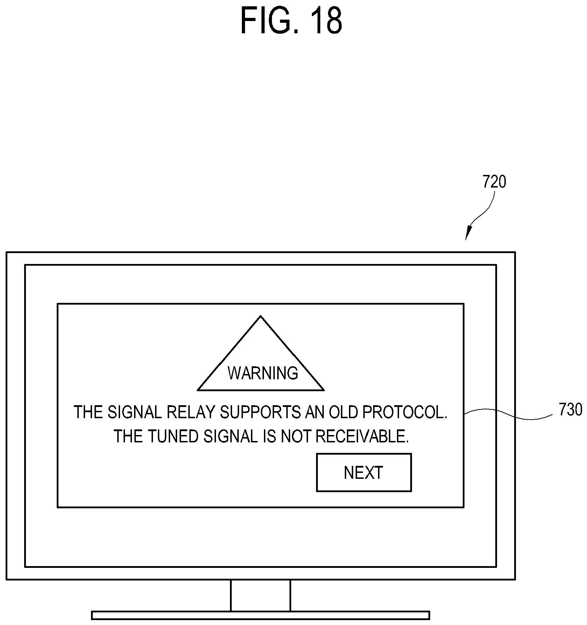

FIG. 18 is a view of illustrating a warning message displayed in the image processing apparatus in the operation S290 of FIG. 17.

As shown in FIG. 18, the image processing apparatus 720 displays a warning message 730 so as to inform a user that the signal relay 710 supports the old protocol if it is determined that there is no reply to the command of 7Ah from the signal relay 710 for the preset period of time. In accordance with the warning message 730, a user may take other measures, for example, the user may act to replace the signal relay 710 by equipment supporting the new protocol.

In the foregoing exemplary embodiment, a user directly inputs the port number, to which the image processing apparatus is connected, to be stored in the image processing apparatus. However, the image processing apparatus may have various ways to take the port number. For example, the image processing apparatus may automatically determine the connection port number without a user's manual input. Below, this exemplary embodiment will be described.

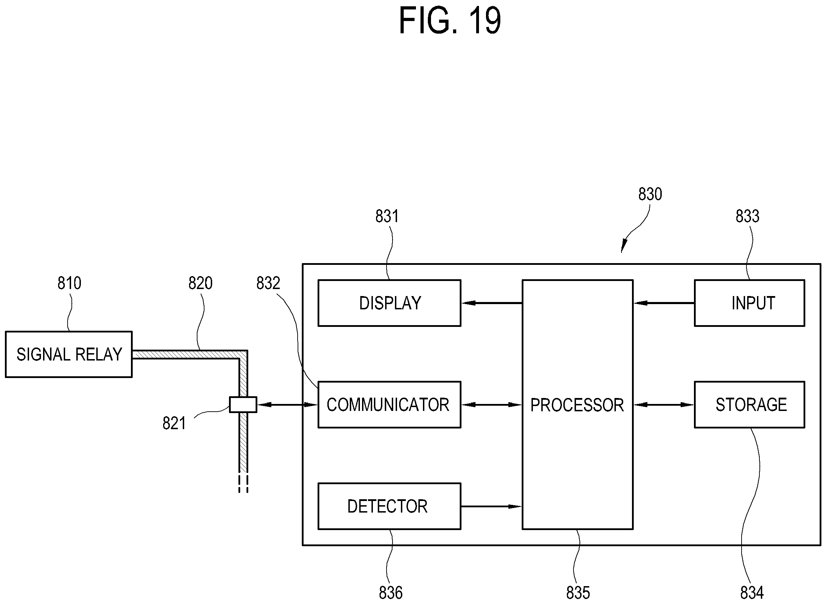

FIG. 19 is a block diagram of an image processing apparatus 830 according to a fifth exemplary embodiment; and

As shown in FIG. 19, the image processing apparatus 830 is electrically connected to one of ports 321 of a coaxial cable 820 connected to a signal relay 810. The image processing apparatus 830 includes a display 831, a communicator 832, an input 833, a storage 834 and a processor 835. These elements correspond to those shown in FIG. 4, and therefore repetitive descriptions thereof will be avoided.

In this exemplary embodiment, the image processing apparatus 830 further includes a detector 836 to detect a port number of the port 821 of the cable 820 connecting with the communicator 832. The detector 836 detects that communicator 832 is connected to the port 821 of the cable 820 at a certain point of time, for example, at the initial setting service of the image processing apparatus 830, and detects the port number of the port 821 to which the communicator 832 is connected, thereby storing a detection result in the storage 834. If the detector 83 determines that the port 821 connecting with the communicator 832 is changed, the detector 83 newly detects the port number of the connected port 821 and updates the storage 834 with the newly detected port number.

There is no limit to the method of detects the port number of the port 821 by the detector 836 since it can be achieved by various circuit elements. As one of examples, the detector 836 may apply a predetermined voltage to the communicator 832 and detect the port number of the port 821 based on a returned voltage since voltage returned to the detector 836 from the port 821 connecting with the communicator 832 is configured differently from voltages returned from the other ports.

In this exemplary embodiment, the detector 836 is separately provided in the processor 835, but not limited thereto. Alternatively, the processor 835 may serve as the detector 836 in accordance with designs of the image processing apparatus 830.

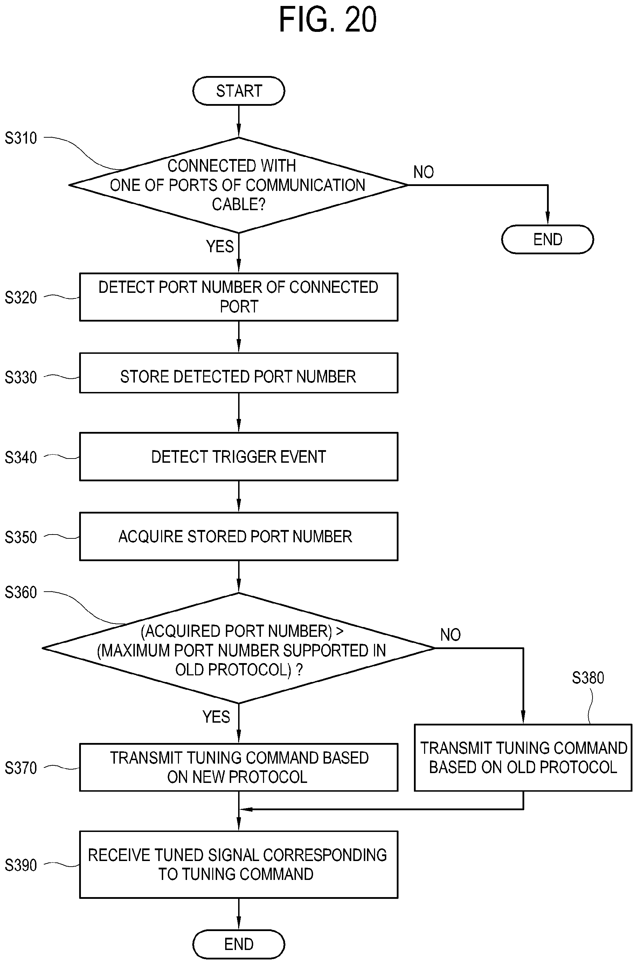

FIG. 20 is a flowchart showing a control method of the image processing apparatus 830 of FIG. 19.

As shown in FIG. 20, at operation S310 the image processing apparatus 830 (see FIG. 19) determines whether it is connected to one among the ports of the coaxial cable.

If it is determined that the image processing apparatus 830 connects with the port of the coaxial cable, at operation S320 the image processing apparatus 830 detects the port number of the connected port. At operation S330 the image processing apparatus 830 stores the detected port number.

At operation S340 the image processing apparatus 830 detects occurrence of a trigger event.

At operation S350 the image processing apparatus 830 acquires the stored port number.

At operation S360 the image processing apparatus 830 determines the acquired port number exceeds the maximum port number supported by the old protocol.

If it is determined that the acquired port umber exceeds the maximum port number supported by the old protocol, at operation S370 the image processing apparatus 830 transmits the new protocol-based tuning command.

On the other hand, if it is determined that the acquired port umber does not exceed the maximum port number supported by the old protocol, at operation S380 the image processing apparatus 830 transmits the old protocol-based tuning command.

At operation S390 the image processing apparatus 830 receives the tuned signal corresponding to the transmitted tuning command from the signal relay.

With these operations, the image processing apparatus 830 can normally communicate with the signal relay through the communication protocols supported by the signal relay.

In the foregoing embodiments, the port number of the cable, to which the image processing apparatus is connected, is acquired, and then the tuning command based on the old protocol is transmitted to the signal relay if the acquired port number is equal to or smaller than the maximum port number of the old protocol, but a tuning command based on a new protocol is transmitted to the signal relay if the acquired port number is greater than the maximum port number of the old protocol. Alternatively, the image processing apparatus may selectively transmit one of the tuning command based on the old protocol and the tuning command based on the new protocol to the signal relay in accordance with satellite ports of the signal relay, and such an alternative embodiment will be described below.

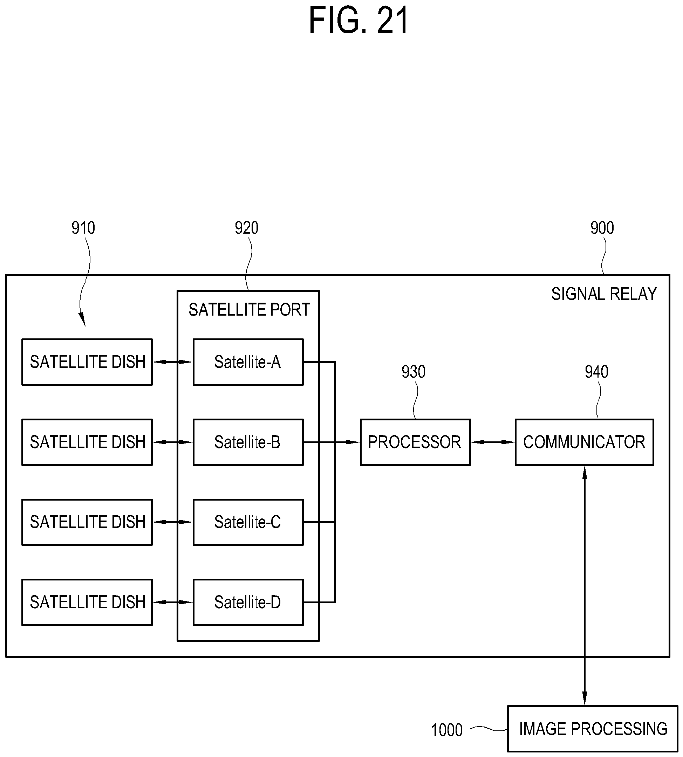

FIG. 21 is a block diagram of a signal relay 900 according to a sixth exemplary embodiment.

As shown in FIG. 21, the signal relay 900 according to the sixth exemplary embodiment may be connected to an image processing apparatus 1000 through a cable and thus transmit a broadcast signal received from a communication satellite to the image processing apparatus 1000. The signal relay 900 is tuned to a broadcast signal based on a tuning command received from the image processing apparatus 1000, and transmits the tuned broadcast signal to the image processing apparatus 1000 via the communicator 940.

The signal relay 900 includes a satellite dish 910 to receive a satellite signal from the communication satellite. As described above, the number of satellite dishes 910 installable per signal relay 900 is determined depending on communication protocols supportable in the corresponding signal relay 900. If the signal relay 900 supports EN50494, i.e. only the old protocol, only two satellite dishes 910 are installable. On the other hand, if the signal relay 900 supports EN50607, i.e. a new protocol, three or more satellite dishes 910 are installable. FIG. 21 illustrates a case that the signal relay 900 supports the new protocol.

For example, the signal relay 900 can have four satellite dishes 910, and includes four satellite banks or satellite ports 920 to which the satellite signals respectively received in the satellite dishes 910 are input. Since the satellite port 920 is provided corresponding to each of the satellite dishes 910, the number of satellite ports 920 is equal to the number of satellite dishes 910.

The satellite signal received in each of the satellite dishes 910 is input to the processor 930 via the satellite port 920. The processor 930 includes an LNB as described above, and is selectively tuned to a channel for receiving the satellite signal in accordance with the tuning command received from the image processing apparatus 1000.

If there are four satellite ports 920, the satellite ports 920 will be respectively named a satellite-A, a satellite-B, a satellite-C and a satellite-D. Such names of the satellite ports 920 are designated in the old protocol and the new protocol. If the signal relay 900 supports only the old protocol, the corresponding signal relay 900 includes only two satellite ports 920 of the satellite-A and the satellite-B.

The satellite port 920 to be used by the image processing apparatus 1000 for receiving the broadcast signal may be designated by a user. For instance, suppose a situation that the image processing apparatus 1000 is designated to use the satellite-C, and a user issues a command to change a channel for the broadcast signal received in the satellite port 920 of the satellite-C. Such a situation may occur when a user moves into a new house and connects the image processing apparatus 1000 with the signal relay 900 of the new house, but the settings of the image processing apparatus 1000 for receiving the broadcast signal are adapted for the previous signal relay of the old house.

In this case, if the signal relay 900 supports the new protocol, there are no problems in receiving a broadcast signal of the satellite-C. However, if the signal relay 900 supports only the old protocol, it is impossible to receive the broadcast signals of the satellite-C and the like since the signal relay 900 supports only the satellite-A and the satellite-B.

In order to display a broadcast image so far as possible even through it is impossible to determine whether the signal relay 900 supports the new protocol or only the old protocol, the image processing apparatus 1000 may operate as follows.

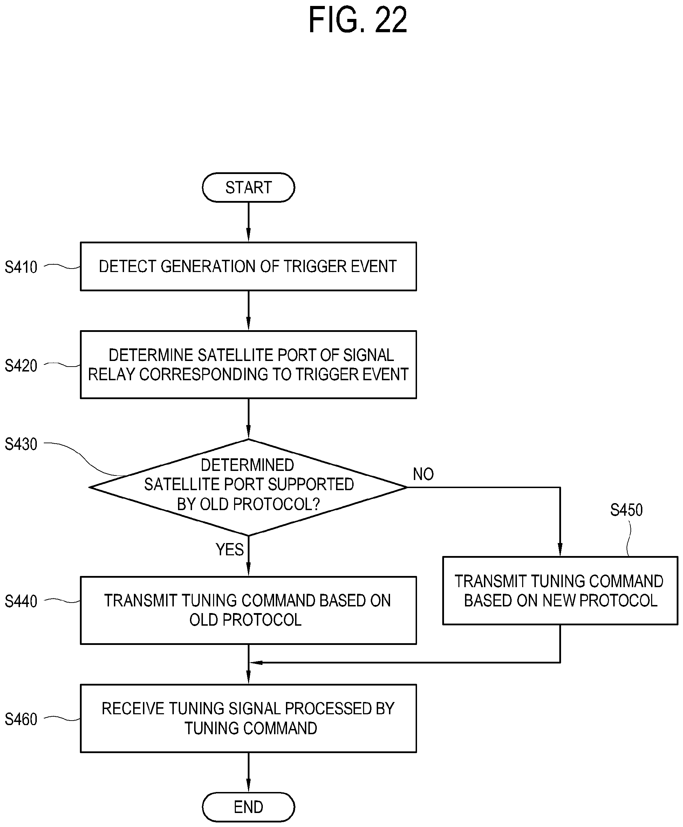

FIG. 22 is a flowchart showing a control method of an image processing apparatus according to the sixth exemplary embodiment. This exemplary embodiment illustrates the image processing apparatus is one of many image processing apparatuses for receiving a tuned signal from one signal relay through a single cable, and may also be applicable to the other image processing apparatuses.

As shown in FIG. 22, at operation S410 the image processing apparatus detects generation of a trigger event. As an example of the trigger event, there may be a user's input for changing a channel.

At operation S420 the image processing apparatus determines the satellite port of the signal relay corresponding to the trigger event. For example, the image processing apparatus may specify the satellite port of the signal relay to which the broadcast signal corresponding to the changed channel desired by a user is input. Here, the satellite ports are named the satellite-A, satellite-B, satellite-C, etc., and the satellite ports supported in the old protocol are limited to two of the satellite-A and the satellite-B.

At operation S430 the image processing apparatus determines whether the determined satellite port is supported by the old protocol. That is, the image processing apparatus determines whether the determined satellite port is within a supportable range of the old protocol, for instance whether the determined satellite port is one of the satellite-A and the satellite-B.

If it is determined that the corresponding satellite port is supported in the old protocol, at operation s440 the image processing apparatus transmits a tuning command based on the old protocol to the signal relay. For example, if the determined satellite port is one of the satellite-A and the satellite-B, the image processing apparatus transmits the tuning command based on the old protocol to the signal relay. In this case, both the signal relay supporting the new protocol and the signal relay supporting the old protocol can process the corresponding tuning command.

On the other hand, if it is determined that the corresponding satellite port is not supported in the old protocol, at operation S450 the image processing apparatus transmits a tuning command based on the new protocol to the signal relay. For example, if the corresponding satellite port is the satellite-C and the like, i.e. the satellite-C, the satellite-D and so on, the image processing apparatus transmits the tuning command based on the new protocol to the signal relay. In this case, the signal relay supporting the old protocol cannot process the corresponding tuning command, but the signal relay supporting the new protocol can process the corresponding tuning command.

At operation S460 the image processing apparatus receives a tuning signal processed by the tuning command transmitted from the signal relay.

Like this, except only one condition that the signal relay supports only the old protocol which cannot support the determined satellite port, the image processing apparatus according to an exemplary embodiment can send the signal relay the tuning command which can be processed by the signal relay.

Alternatively, the image processing apparatus may take both the satellite port of the signal relay and a device connection port into account. Here, the satellite port refers to a port through which a satellite signal received in the satellite dish is input to the signal relay. The device connection port refers to a port through which a broadcast signal selected and output from the signal relay is input to the image processing apparatus via a cable, and also refers to a cable port to which the image processing apparatus is connected as described above.

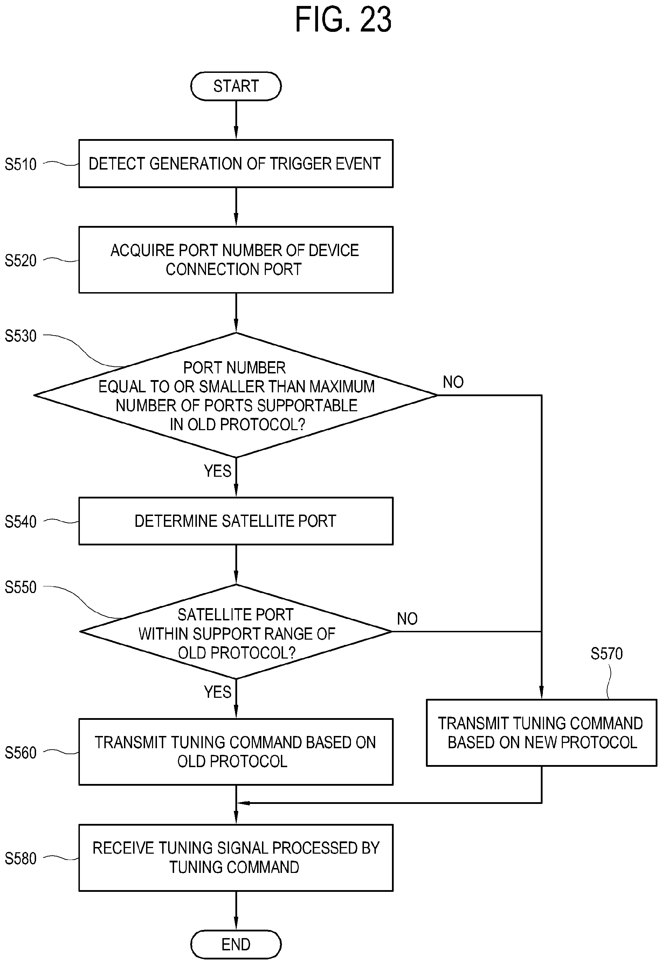

FIG. 23 is a flowchart showing a control method of an image processing apparatus according to a seventh exemplary embodiment.

As shown in FIG. 23, at operation S510 the image processing apparatus detects generation of a trigger event. For example, the trigger event may include a user's input for instructing a change from the current channel into a channel for a broadcast signal received from a certain communication satellite.

At operation S520 the image processing apparatus acquires a port number of the device connection port.

At operation S530 the image processing apparatus determines whether the acquired port number is equal to or smaller than the maximum number of ports supportable in the old protocol. Since the old protocol supports total eight ports from 0 to 7, the maximum number of ports in the old protocol is 8. In other words, if the acquired port number is one from 0 to 7, it is determined that the acquired port number is equal to or smaller than the maximum number of ports supportable in the old protocol.

If it is determined that the port number is equal to or smaller than the maximum number of ports supportable in the old protocol, at operation S540 the image processing apparatus determines a satellite port corresponding to a broadcast signal targeted for the change.

At operation S550 the image processing apparatus determines whether the determined satellite port is within a support range of the old protocol. Since the old protocol supports two satellite ports of the satellite-A and the satellite-B, it is determined that the determined satellite is within the support range of the old protocol if the determined satellite port is one of the satellite-A and the satellite-B.

If it is determined that the determined satellite port is within the support range of the old protocol, at operation S560 the image processing apparatus transmits the tuning command based on the old protocol to the signal relay.

On the other hand, if it is determined in the operation S530 that the port number is greater than the maximum number of ports supportable in the old protocol, or if it is determined in the operation S550 that the satellite port is not within the support range of the old protocol, at operation S570 the image processing apparatus transmits a tuning command based on a new protocol to the signal relay.

At operation S580 the image processing apparatus receives a tuning signal processed by the tuning command transmitted from the signal relay. The methods according to the foregoing exemplary embodiments may be achieved in the form of a program command that can be implemented in various computers, and recorded in a computer readable medium. Such a computer readable medium may include a program command, a data file, a data structure or the like, or combination thereof. For example, the computer readable medium may be stored in a voltage or nonvolatile storage such as a read only memory (ROM) or the like, regardless of whether it is deletable or rewritable, for example, a RAM, a memory chip, a device or integrated circuit (IC) like memory, or an optically or magnetically recordable or machine (e.g., a computer)-readable storage medium, for example, a compact disk (CD), a digital versatile disk (DVD), a magnetic disk, a magnetic tape or the like. It will be appreciated that a memory, which can be included in a mobile terminal, is an example of the machine-readable storage medium suitable for storing a program having instructions for materializing the exemplary embodiments. The program command recorded in this storage medium may be specially designed and configured according to the exemplary embodiments, or may be publicly known and available to those skilled in the art of computer software.

In summary, an image processing apparatus suitable for receiving satellite broadcasts is disclosed, the apparatus including: a communicator configured to connect with one of a plurality of ports of a cable connected to a signal relay for being tuned to a broadcast signal, and communicate with the signal relay using one of a first communication protocol supporting a first number of ports among the plurality of ports and a second communication protocol supporting a second number of ports, greater than the first number; and at least one processor configured to transmit a tuning command for being tuned to the broadcast signal to the signal relay, receive the broadcast signal tuned in response to the tuning command from the signal relay, and process the received broadcast signal to be displayed as an image. The at least one processor transmits the tuning command based on the first communication protocol, to the signal relay, if it is determined that a port number of the port connected to the communicator is within a first number range supported by the first communication protocol based on identification information of the port.

Although a few preferred embodiments have been shown and described, it will be appreciated by those skilled in the art that various changes and modifications might be made without departing from the scope of the invention, as defined in the appended claims.

All of the features disclosed in this specification (including any accompanying claims and drawings), and/or all of the steps of any method or process so disclosed, may be combined in any combination, except combinations where at least some of such features and/or steps are mutually exclusive.

Each feature disclosed in this specification (including any accompanying claims and drawings) may be replaced by alternative features serving the same, equivalent or similar purpose, unless expressly stated otherwise. Thus, unless expressly stated otherwise, each feature disclosed is one example only of a generic series of equivalent or similar features.

The invention disclosed herein, but not necessarily claimed, is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

## Claims

1. An image processing apparatus (310) comprising:
a communicator (312) configured to connect with one of a plurality of ports (210) of a cable (200) connected to a signal relay (100) for being tuned to a broadcast signal, and communicate with the signal relay (100) through one of a first communication protocol supporting a first number of ports among the plurality of ports and a second communication protocol supporting a second number of ports greater than the first number of ports; and
at least one processor (315) configured to transmit a tuning command for being tuned to the broadcast signal to the signal relay (100), and configured to receive the broadcast signal tuned in response to the tuning command from the signal relay (100), and configured to process the received broadcast signal to be displayed as an image;
**characterized by** the at least one processor (315) being configured to transmit the tuning command based on the first communication protocol, to the signal relay (100), if it is determined that a port number of the port (210) connected to the communicator (312) is within a first number range that is supported by the first communication protocol based on identification information of the port (210) and, the at least one processor (315) is configured to transmit the tuning command based on the second communication protocol, to the signal relay (100), if it is determined that a port number of the connected port (210) is not within the first number range that is supported by the first communication protocol.

2. The image processing apparatus (310) according to claim 1, wherein the identification information of the port (210) comprises a port number of the connected port; and
wherein the at least one processor (315) is configured to determine from the identification information of the port (210) whether the port number of the connected port (210) is within or greater than the first number range supported by the first communication protocol .

3. The image processing apparatus (310) according to any preceding claim; wherein a maximum port number supported by the second communication protocol is greater than the maximum port number supported by the first communication protocol.

4. The image processing apparatus (310) according to any preceding claim, wherein each port number of the plurality of ports (210) and the maximum port number supported by the first communication protocol is an integer equal to or higher than 0.

5. The image processing apparatus (310) according to any preceding claim, wherein the first communication protocol is according to EN50494, and the second communication protocol is according to EN50607.

6. The image processing apparatus (310) according to any preceding claim, wherein the at least one processor (315) is arranged to transmit to the signal relay (100) a command set to cause the signal relay (100) to send a reply when the port number of the connected port (210) is greater than the first number range supported by the first communication protocol, and wherein the at least one processor (315) is arranged to transmit the tuning command based on the second communication protocol to the signal relay upon receiving the reply to the command set from the signal relay within a preset period of time.

7. The image processing apparatus (310) according to claim 6, wherein the at least one processor (315) is arranged to display a warning message that the tuned broadcast signal is not receivable from the signal relay if no reply to the command set is received at the at least one processor (315), from the signal relay (100), within the preset period of time.

8. The image processing apparatus (310) according to any preceding claim, further comprising a user input (313) configured to allow a user to input the identification information.

9. A method of controlling an image processing apparatus (310), the method comprising:
by the image processing apparatus, connecting with one of a plurality of ports of a cable connected to a signal relay for being tuned to a broadcast signal;
by the image processing apparatus, transmitting a tuning command for being tuned to the broadcast signal to the signal relay by one of a first communication protocol compatible with a first number of ports among the plurality of ports and a second communication protocol compatible with a second number of ports among the plurality of ports, the second number being greater than the first number (S140, S150); and
by the image processing apparatus, receiving the broadcast signal tuned in response to the tuning command (S160) from the signal relay (100) and processing the received broadcast signal to be displayed as an image (S170),
**characterized in that**
the transmitting of the tuning command comprises:
acquiring identification information about a port to which the image processing apparatus is connected (S120); and
transmitting the tuning command based on the first communication protocol (S150) to the signal relay (100) when it is determined that a port number of the connected port (210) is within a first number range supported by the first communication protocol, based on the acquired identification information and, the transmitting the tuning command comprises transmitting the tuning command based on the second communication protocol (S140), to the signal relay (100), when it is determined that a port number of the connected port (210) is greater than the first number range supported by the first communication protocol.

10. The method according to claim 9, wherein:
the identification information of the port comprises a port number of the connected port (210), and
determining whether the port number of the connected port (210) is within, or greater than, the first number range supported by the first communication protocol (S130).

11. The method according to claim 9 or claim 10, wherein the first communication protocol is according to EN50494, and the second communication protocol is according to EN50607.

12. The method according to any one of claims 9 to 11, wherein the transmitting the tuning command comprises:
transmitting to the signal relay (100) a command set to cause the signal relay (100) to send a reply when the port number of the connected port (210) is greater than the first number range supported by the first communication protocol; and
transmitting the tuning command based on the second communication protocol (S140), to the signal relay (100), when the reply to the command set from the signal relay is received within a preset period of time.

13. The method according to claim 12, comprising: displaying a warning message that the tuned broadcast signal is not receivable from the signal relay (100) when no reply to the command from the signal relay (100) is received within the preset period of time.

## Patentansprüche

1. Bildverarbeitungseinrichtung (310), die Folgendes umfasst:
einen Kommunikator (312), der zum Verbinden mit einem von mehreren Ports (210) eines Kabels (200), das mit einem Signalrelais (100) zur Abstimmung auf ein Rundfunksignal verbunden ist, und zum Kommunizieren mit dem Signalrelais (100) durch ein erstes Kommunikationsprotokoll, das eine erste Zahl von Ports unter den mehreren Ports unterstützt, oder ein zweites Kommunikationsprotokoll, das eine zweite Zahl von Ports unterstützt, die größer als die erste Zahl von Ports ist, konfiguriert ist; und
wenigstens einen Prozessor (350), der zum Übertragen eines Abstimmungsbefehls zur Abstimmung auf das Rundfunksignal an das Signalrelais (100) konfiguriert ist und zum Empfangen des Rundfunksignals, das als Reaktion auf den Abstimmungsbefehl abgestimmt ist, von dem Signalrelais (100) konfiguriert ist und zum Verarbeiten des empfangenen Rundfunksignals konfiguriert ist, damit es als ein Bild angezeigt wird;
**gekennzeichnet durch** den wenigstens einen Prozessor (315), der zum Übertragen des Abstimmungsbefehls basierend auf dem ersten Kommunikationsprotokoll an das Signalrelais (100) konfiguriert ist, falls basierend auf Identifikationsinformationen des Ports (210) bestimmt wird, dass eine Portzahl des Ports (210), der mit dem Kommunikator (312) verbunden ist, innerhalb eines ersten Zahlenbereichs liegt, der durch das erste Kommunikationsprotokoll unterstützt wird, und der wenigstens eine Prozessor (315) zum Übertragen des Abstimmungsbefehls basierend auf dem zweiten Kommunikationsprotokoll an das Signalrelais (100) konfiguriert ist, falls bestimmt wird, dass eine Portzahl des verbundenen Ports (210) nicht innerhalb des ersten Zahlenbereichs liegt, der durch das erste Kommunikationsprotokoll unterstützt wird.

2. Bildverarbeitungseinrichtung (310) nach Anspruch 1, wobei die Identifikationsinformationen des Ports (210) eine Portzahl des verbundenen Ports umfassen; und wobei der wenigstens eine Prozessor (315) zum Bestimmen, ob die Portzahl des verbundenen Ports (210) innerhalb des ersten Zahlenbereichs, der durch das erste Kommunikationsprotokoll unterstützt wird, liegt oder größer als dieser ist, aus den Identifikationsinformationen des Ports (210) konfiguriert ist.

3. Bildverarbeitungseinrichtung (310) nach einem vorhergehenden Anspruch; wobei eine maximale Portzahl, die durch das zweite Kommunikationsprotokoll unterstützt wird, größer als die maximale Portzahl ist, die durch das erste Kommunikationsprotokoll unterstützt wird.

4. Bildverarbeitungseinrichtung (310) nach einem vorhergehenden Anspruch, wobei jede Portzahl der mehreren Ports (210) und die maximale Portzahl, die durch das erste Kommunikationsprotokoll unterstützt wird, eine ganze Zahl gleich oder größer als 0 ist.

5. Bildverarbeitungseinrichtung (310) nach einem vorhergehenden Anspruch, wobei das erste Kommunikationsprotokoll EN50494 entspricht und das zweite Kommunikationsprotokoll EN50607 entspricht.

6. Bildverarbeitungseinrichtung (310) nach einem vorhergehenden Anspruch, wobei der wenigstens eine Prozessor (315) zum Übertragen eines Befehlssatzes zum Bewirken, dass das Signalrelais (100) eine Antwort sendet, wenn die Portzahl des verbundenen Ports (210) größer als der erste Zahlenbereich ist, der durch das erste Kommunikationsprotokoll unterstützt wird, an das Signalrelais (100) eingerichtet ist und wobei der wenigstens eine Prozessor (315) zum Übertragen des Abstimmungsbefehls basierend auf dem zweiten Kommunikationsprotokoll an das Signalrelais beim Empfangen der Antwort auf den Befehlssatz von dem Signalrelais innerhalb einer vorgegebenen Zeitperiode eingerichtet ist.

7. Bildverarbeitungseinrichtung (310) nach Anspruch 6, wobei der wenigstens eine Prozessor (315) zum Anzeigen einer Warnnachricht, dass das abgestimmte Rundfunksignal von dem Signalrelais nicht zu empfangen ist, falls keine Antwort auf den Befehlssatz von dem Signalrelais (100) an dem wenigstens einen Prozessor (3/5) innerhalb der vorgegebenen Zeitperiode empfangen wird, eingerichtet ist.

8. Bildverarbeitungseinrichtung (310) nach einem vorhergehenden Anspruch, die ferner eine Benutzereingabe (313) umfasst, die zum Ermöglichen konfiguriert ist, dass ein Benutzer die Identifikationsinformationen eingibt.

9. Verfahren zum Steuern einer Bildverarbeitungseinrichtung (310), wobei das Verfahren Folgendes umfasst:
Verbinden mit einem von mehreren Ports eines Kabels, das mit einem Signalrelais zur Abstimmung auf ein Rundfunksignal verbunden ist, durch die Bildverarbeitungseinrichtung;
Übertragen durch die Bildverarbeitungseinrichtung eines Abstimmungsbefehls zur Abstimmung auf das Rundfunksignal an das Signalrelais durch ein erstes Kommunikationsprotokoll, das mit einer ersten Zahl von Ports unter den mehreren Ports kompatibel ist, oder ein zweites Kommunikationsprotokoll, das mit einer zweiten Zahl von Ports unter den mehreren Ports kompatibel ist, wobei die zweite Zahl größer als die erste Zahl ist (S140, S150); und
Empfangen des Rundfunksignals, das als Reaktion auf den Abstimmungsbefehl (S160) abgestimmt ist, durch die Bildverarbeitungsvorrichtung von dem Signalrelais (100) und Verarbeiten des empfangenen Rundfunksignals, damit es als ein Bild angezeigt wird (S170);
**dadurch gekennzeichnet, dass**
das Übertragen des Abstimmungsbefehls Folgendes umfasst:
Erfassen von Identifikationsinformationen über einen Port, mit dem die Bildverarbeitungseinrichtung verbunden ist (S120); und
Übertragen des Abstimmungsbefehls basierend auf dem ersten Kommunikationsprotokoll (S150) an das Signalrelais (100), wenn basierend auf den erfassten Identifikationsinformationen bestimmt wird, dass eine Portzahl des verbundenen Ports (210) innerhalb eines ersten Zahlenbereichs liegt, der durch das erste Kommunikationsprotokoll unterstützt wird, und das Übertragen des Abstimmungsbefehls Übertragen des Abstimmungsbefehls basierend auf dem zweiten Kommunikationsprotokoll (S140) an das Signalrelais (100) umfasst, wenn bestimmt wird, dass eine Portzahl des verbundenen Ports (210) größer als der erste Zahlenbereich ist, der durch das erste Kommunikationsprotokoll unterstützt wird.

10. Verfahren nach Anspruch 9, wobei: die Identifikationsinformationen des Ports eine Portzahl des verbundenen Ports (210) umfassen, und
Bestimmen, ob die Portzahl des verbundenen Ports (210) innerhalb des ersten Zahlenbereichs, der durch das erste Kommunikationsprotokoll unterstützt wird, liegt oder größer als dieser ist (S130).

11. Verfahren nach Anspruch 9 oder 10, wobei das erste Kommunikationsprotokoll EN50494 entspricht und das zweite Kommunikationsprotokoll EN50607 entspricht.

12. Verfahren nach einem der Ansprüche 9 bis 11, wobei das Übertragen des Abstimmungsbefehls Folgendes umfasst:
Übertragen eines Befehlssatzes zum Bewirken, dass das Signalrelais (100) eine Antwort sendet, wenn die Portzahl des verbundenen Ports (210) größer als der erste Zahlenbereich ist, der durch das erste Kommunikationsprotokoll unterstützt wird, an das Signalrelais (100); und
Übertragen des Abstimmungsbefehls basierend auf dem zweiten Kommunikationsprotokoll (S140) an das Signalrelais (100), wenn die Antwort auf den Befehlssatz von dem Signalrelais innerhalb einer vorgegebenen Zeitperiode empfangen wird.

13. Verfahren nach Anspruch 12, das Folgendes umfasst: Anzeigen einer Warnnachricht, dass das abgestimmte Rundfunksignal von dem Signalrelais (100) nicht zu empfangen ist, wenn keine Antwort auf den Befehl von dem Signalrelais (100) innerhalb der vorgegebenen Zeitperiode empfangen wird.

## Revendications

1. Appareil de traitement d'image (310) comprenant :
un appareil de communication (312) configuré pour être raccordé à un port d'une pluralité de ports (210) d'un câble (200) raccordé à un relais de signal (100) pour être réglé à un signal de diffusion et pour communiquer avec le relais de signal (100) au moyen soit d'un premier protocole de communication prenant en charge un premier nombre de ports parmi la pluralité de ports, soit d'un second protocole de communication prenant en charge un second nombre de ports supérieur au premier nombre de ports ; et
au moins un processeur (315) configuré pour transmettre une commande de réglage pour qu'il soit réglé au signal de diffusion, au relais de signal (100) et configuré pour recevoir le signal de diffusion réglé en réponse à la commande de réglage en provenance du relais de signal (100) et configuré pour traiter le signal de diffusion reçu pour qu'il soit affiché sous la forme d'une image ;
**caractérisé par** le ou les processeurs (315) qui sont configurés pour transmettre la commande de réglage basée sur le premier protocole de communication, au relais de signal (100), s'il est déterminé qu'un numéro de port du port (210) raccordé au dispositif de communication (312) se situe dans une première tranche de numéros qui est prise en charge par le premier protocole de communication en se basant sur des informations d'identification du port (210) et le ou les processeurs (315) sont configurés pour transmettre la commande de réglage basée sur le second protocole de communication, au relais de signal (100), s'il est déterminé qu'un numéro de port du port raccordé (210) ne se situe pas dans la première tranche de numéros qui est prise en charge par le premier protocole de communication.

2. Appareil de traitement d'image (310) selon la revendication 1, dans lequel les informations d'identification du port (210) comprennent un numéro de port du port raccordé ; et
dans lequel le ou les processeurs (315) sont configurés pour déterminer à partir des informations d'identification du port (210) si le numéro de port du port raccordé (210) se situe dans la première tranche de numéros prise en charge par le premier protocole de communication ou est supérieur à cette dernière.

3. Appareil de traitement d'image (310) selon l'une quelconque des revendications précédentes, dans lequel un numéro de port maximal pris en charge par le second protocole de communication est supérieur au numéro de port maximal pris en charge par le premier protocole de communication.

4. Appareil de traitement d'image (310) selon l'une quelconque des revendications précédentes, dans lequel chaque numéro de port de la pluralité de ports (210), ainsi que le numéro de port maximal pris en charge pas le premier protocole de communication, est un nombre entier égal ou supérieur à zéro.

5. Appareil de traitement d'image (310) selon l'une quelconque des revendications précédentes, dans lequel le premier protocole de communication est conforme à la norme EN50494 et le second protocole de communication est conforme à la norme EN50607.

6. Appareil de traitement d'image (310) selon l'une quelconque des revendications précédentes, dans lequel le ou les processeurs (315) sont conçus pour transmettre au relais de signal (100) un ensemble de commandes pour contraindre le relais de signal (100) à envoyer une réponse lorsque le numéro de port du port raccordé (210) est supérieur à la première tranche de numéros prise en charge par le premier protocole de communication et dans lequel le ou les processeurs (315) sont conçus pour transmettre la commande de réglage basée sur le second protocole de communication au relais de signal lors de la réception de la réponse à l'ensemble de commandes en provenance du relais de signal pendant une période de temps prédéfinie.

7. Appareil de traitement d'image (310) selon la revendication 6, dans lequel le ou les processeurs (315) sont conçus pour afficher un message d'avertissement indiquant que le signal de diffusion réglé ne peut pas être reçu du relais de signal si aucune réponse à l'ensemble de commandes n'est reçue au niveau du ou des processeurs (315), en provenance du relais de signal (100), pendant la période de temps prédéfinie.

8. Appareil de traitement d'image (310) selon l'une quelconque des revendications précédentes, comprenant en outre une entrée d'utilisateur (313) configurée pour permettre à un utilisateur d'entrer les informations d'identification.

9. Procédé de commande d'un appareil de traitement d'image (310), le procédé consistant :
au moyen de l'appareil de traitement d'image, à se raccorder à un port d'une pluralité de ports d'un câble raccordé à un relais de signal pour être réglé à un signal de diffusion ;
au moyen de l'appareil de traitement d'image, à transmettre une commande de réglage pour qu'il soit réglé au signal de diffusion, au relais de signal au moyen soit d'un premier protocole de communication compatible avec un premier nombre de ports parmi la pluralité de ports, soit d'un second protocole de communication compatible avec un second nombre de ports parmi la pluralité de ports, le second nombre étant supérieur au premier nombre (S140, S150) ; et
au moyen de l'appareil de traitement d'image, à recevoir le signal de diffusion réglé en réponse à la commande de réglage (S160) en provenance du relais de signal (100) et à traiter le signal de diffusion reçu pour qu'il soit affiché sous la forme d'une image (S170),
**caractérisé en ce que**
la transmission de la commande de réglage consiste :
à acquérir des informations d'identification concernant un port auquel l'appareil de traitement d'image est raccordé (S120) ; et
à transmettre la commande de réglage basée sur le premier protocole de communication (S150), au relais de signal (100), lorsqu'il est déterminé qu'un numéro de port du port raccordé (210) se situe dans une première tranche de numéros qui est prise en charge par le premier protocole de communication, en se basant sur les informations d'identification acquises, et la transmission de la commande de réglage consiste à transmettre la commande de réglage basée sur le second protocole de communication (S140), au relais de signal (100), lorsqu'il est déterminé qu'un numéro de port du port raccordé (210) est supérieur à la première tranche de numéros prise en charge par le premier protocole de communication.

10. Procédé selon la revendication 9, dans lequel :
les informations d'identification du port comprennent un numéro de port du port raccordé (210) et
consistant à déterminer si le numéro de port du port raccordé (210) se situe dans la première tranche de numéros prise en charge par le premier protocole de communication (S130) ou est supérieur à cette dernière.

11. Procédé selon la revendication 9 ou la revendication 10, dans lequel le premier protocole de communication est conforme à la norme EN50494 et le second protocole de communication est conforme à la norme EN50607.

12. Procédé selon l'une quelconque des revendications 9 à 11, dans lequel la transmission de la commande de réglage consiste :
à transmettre, au relais de signal (100), un ensemble de commandes pour contraindre le relais de signal (100) à envoyer une réponse lorsque le numéro de port du port raccordé (210) est supérieur à la première tranche de numéros prise en charge par le premier protocole de communication ; et
à transmettre la commande de réglage basée sur le second protocole de communication (S140) au relais de signal (100) lorsque la réponse à l'ensemble de commandes en provenance du relais de signal est reçue pendant une période de temps prédéfinie.

13. Procédé selon la revendication 12, consistant : à afficher un message d'avertissement indiquant que le signal de diffusion réglé ne peut pas être reçu du relais de signal (100) lorsqu'aucune réponse à la commande en provenance du relais de signal (100) n'est reçue pendant la période de temps prédéfinie.
